# EUROPEAN PATENT APPLICATION

(11) **EP 4 786 269 A1**
(43) Date of publication of application: **05.08.2026**
(21) Application number: 25154595.0
(22) Date of filing: 29.01.2025
(51) Int. Cl.: B60N 2/34, B64D 11/06

(54) **A PASSENGER SEAT FOR A VEHICLE, PARTICULARLY FOR AN AIRCRAFT**

(71) Applicant: Design Investment Sàrl, 1239 Collex-Bossy (CH)
(72) Inventor: Collins, Alexandra, 1239 Collex-Bossy (CH); Collins, Mark, 1239 Collex-Bossy (CH); Bruyère, Jean-Baptise, 1239 Collex-Bossy (CH)
(74) Representative: Hafner & Kohl PartmbB

(57) **Abstract**

A passenger seat for a vehicle, particularly for an aircraft.

## Description

The invention relates to a passenger seat for a vehicle, particularly for an aircraft, the passenger seat being transferrable in a first configuration in which it provides a sitting surface on which a passenger can sit and in a second configuration in which it provides a lying surface on which a passenger can lie.

Passenger seats for vehicles, particularly for aircrafts, are generally known from the prior art. Particularly, the prior art comprises several constructive designs of passenger seats for a vehicle, particularly for an aircraft, which are transferrable in a first configuration in which they provide a sitting surface on which a passenger can sit and in a second configuration in which they provide a lying surface on which a passenger can lie. Respective passenger seats are typically, used as so-called business class seats in aircraft.

While known passenger seats provide reliable functionality, particularly with regard to the implementation of respective first configurations in which a sitting surface on which a passenger can sit is provided and second configurations in which a lying surface on which a passenger can lie is provided, the overall construction of such passenger seats is typically, highly complex. The complexity of such passenger seats is particularly, based on the requirement of one or more drive devices including motors, related drive elements, etc. and control units which enable a non-manual transfer of respective passenger seats from respective first configurations in respective second configurations, or vice versa. Further, respective drive devices and related control units typically, render a respective passenger seat heavy and also take up a considerable volume which is not available for the passenger's comfort by offering more usable space and for other purposes, e.g. such as to provide (additional) stowage volume for items, belongings, etc. of a passenger.

In view of the above, there exists a need for an improved passenger seat which overcomes at least some of the drawbacks of known passenger seats, particularly by being reduced in weight and/or by providing additional volume which can e.g. be used for additional passenger "living space", stowing items, belongings, etc. of a passenger.

It is therefore, the object of the present invention to provide an improved passenger seat for a vehicle, particularly for an aircraft.

The object is achieved by the subject-matter of appended claim 1. The subject-matters of the appended dependent claims refer to exemplary embodiments of the subject-matter of claim 1.

A first aspect of the invention relates to a passenger seat for a vehicle. The vehicle is particularly an aircraft, more particularly a commercial aircraft. As such, the passenger seat is particularly, to be installed in an aircraft. However, the passenger seat can generally also be installed in other types of vehicles, such as e.g. vehicles which move on a ground, such as cars, buses etc., or vehicles which move on water, such as boats, ships, etc.

The passenger seat is transferrable in a first configuration in which it provides a sitting surface on which a passenger can sit and in a second configuration in which it provides a lying surface on which a passenger can lie, particularly with his/her body being fully stretched out. Particularly, the passenger seat is reversibly transferrable in a first configuration in which it provides a sitting surface on which a passenger can sit and in a second configuration in which it provides a lying surface on which a passenger can lie, particularly with his/her body being fully stretched out. As such, the passenger seat can be transferred into two different configurations, wherein, in the first configuration, the passenger seat provides a sitting surface on which a passenger can sit (sitting configuration), and, in the second configuration, the passenger seat provides lying surface on which a passenger can lie, particularly with his/her body being fully stretched out (lying configuration). In the second configuration of the passenger seat, the passenger seat can thus, particularly, provide a lying surface which enables that an (adult) person can (substantially) completely recline on the lying surface, particularly such that the longitudinal axis of the passenger is (substantially) parallel to a horizontal (reference) axis or plane which can be an underground, such as e.g. the floor of a vehicle in which the passenger seat is installed. The passenger seat is therefore, particularly suitable for being used as a so-called business class seat of an aircraft as respective business-class seats are typically, transferrable in respective first and second configurations.

The passenger seat comprises at least a first module and a second module. Each of the first and second modules can comprise a base body. A respective base body can generally have a cuboid- or cuboid-like base shape, for instance. As will be apparent from the following, each of the first and second modules can be provided with or can comprise one or more cushion elements, such as e.g. cushioning layers, made from a cellular material or material structure, such as e.g. a foam or foam structure, for example. Respective one or more cushion elements can provide a support for a passenger who is at least partially sitting or lying on the respective module. At least with respect to the second module, several cushion elements may be provided, particularly in a vertically stacked arrangement, e.g. such that at least one first cushion element can provide a support for a passenger who is sitting on the second module in the first configuration of the passenger seat and at least one second cushion element can provide a support for a passenger who is at least partially lying on the second module in the second configuration of the passenger seat, for example.

The first and second modules are generally configured to co-act in the first and second configuration of the passenger seat in a specific manner which is specified in more detail in connection with the following exemplary embodiments:
In the first configuration of the passenger seat, the first module provides a support surface for supporting the second module and the second module provides a sitting surface for a passenger.

In the first configuration of the passenger seat, the sitting surface provided by the second module thus, forms a part, particularly a direct part, of the sitting surface provided by the passenger seat in the first configuration. Particularly, the sitting surface provided by the second module in the first configuration of the passenger seat can form the part of the sitting surface provided by the passenger seat in the first configuration on which a passenger can actually place his/her buttocks and at least parts of his/her upper leg (thigh), particularly when using the passenger seat in the first configuration in the intended manner. The sitting surface of the second module thus, typically provides, in the first configuration of the passenger seat, a freely exposed surface on which a passenger can place his/her buttocks and at least parts of his/her upper leg (thigh), particularly when using the passenger seat in the first configuration in the intended manner. As such, the sitting surface of the second module is typically, arranged above the first module, particularly above a support surface of the first module (which will be specified in the following in more detail), in the first configuration of the passenger seat.

In the first configuration of the passenger seat, the support surface provided by the first module thus, does not form part, particularly no direct part, of the sitting surface provided by the passenger seat in the first configuration as it provides support for the second module. The support surface of the first module thus, provides, in the first configuration of the passenger seat, a surface on which the second module can be supported or is supported. The support surface of the first module thus, typically provides, in the first configuration of the passenger seat, no freely exposed surface on which a passenger can place a part of his/her body, particularly when using the passenger seat in the first configuration in the intended manner. As such, the support surface of the first module is typically, arranged below the second module, particularly below a surface of the second module opposite the sitting surface, in the first configuration of the passenger seat.

In the first configuration of the passenger seat, the first and second modules are therefore, typically arranged in a vertically stacked arrangement as the second module is arranged above the first module. As will be apparent from below, in the second configuration of the passenger seat, the first and second modules are typically, not arranged in a respective vertically stacked arrangement but in a side-by-side arrangement with respect to or parallel to a reference axis, particularly a substantially horizontal reference axis.

In the second configuration of the passenger seat, the first module provides a first part of a lying surface for a passenger and the second module provides a second part of the lying surface for a passenger. The lying surface can correspond to a lying area provided by the passenger seat in the second configuration.

In the second configuration of the passenger seat, the first module thus, provides a surface, which can be deemed part of a lying surface, and thus, generally forms a part, particularly a direct part, of the lying surface provided by the passenger seat in the second configuration. Particularly, the (lying) surface provided by the first module in the second configuration of the passenger seat can form the part of the lying surface provided by the passenger seat in the second configuration on which a passenger can actually place at least one of: parts of his/her upper body, parts of his/her buttocks, and at least parts of his/her upper leg (thigh), particularly when using the passenger seat in the second configuration in the intended manner. The surface of the first module thus, typically provides, in the second configuration of the passenger seat, a freely exposed surface on which a passenger can place, when using the lying surface provided by the passenger seat in the intended manner, at least one of: parts of his/her upper body, parts of his/her buttocks and at least parts of his/her upper leg (thigh). In the second configuration of the passenger seat, the first module thus, has a freely exposed surface which forms a part, particularly a direct part, of the lying surface provided by the passenger seat in the second configuration. As such, the surface of the first module is typically, not arranged below the second module but, as will be apparent from further below, arranged in a common plane with a surface of the second module, wherein the common plane can be coincident or parallel with a plane of the lying surface provided by the passenger seat in the second configuration.

In the second configuration of the passenger seat, the second module also provides a surface, which can be deemed part of a lying surface, and thus, generally forms a part, particularly a direct part, of the lying surface provided by the passenger seat in the second configuration. Particularly, the (lying) surface provided by the second module in the second configuration of the passenger seat can form the part of the lying surface provided by the passenger seat in the second configuration on which a passenger can actually place at least one of: parts of his/her buttocks, at least parts of his/her upper leg (thigh), and at least parts of his/her lower leg (calf, foot, etc.), particularly when using the passenger seat in the second configuration in the intended manner. The surface of the second module thus, typically provides, in the second configuration of the passenger seat, a freely exposed surface on which a passenger can place, when using the lying surface provided by the passenger seat in the intended manner, at least one of: parts of his/her buttocks, at least parts of his/her upper leg (thigh), and at least parts of his/her lower leg (calf, foot, etc.). In the second configuration of the passenger seat, the second module thus, has a freely exposed surface which forms a part, particularly a direct part, of the lying surface provided by the passenger seat in the second configuration. As such, the surface of the second module is typically, not arranged above the first module but arranged in the aforementioned common plane with a surface of the first module, wherein the common plane can be coincident or parallel with a plane of the lying surface provided by the passenger seat in the second configuration.

As indicated above, in the second configuration of the passenger seat, the first and second modules are therefore, not arranged in a vertically stacked arrangement as the second module is not arranged above the first module. In the second configuration of the passenger seat, the first and second modules are rather arranged in a side-by-side arrangement in or parallel to a reference axis, particularly a substantially horizontal reference axis.

The above-specified construction of the passenger seat enables transferring the passenger seat from the first configuration in the second configuration, and vice versa, without the requirement of drive devices including motors, related drive elements, etc., control units, etc. as the arrangement possibilities of the first and second modules relative to each other, i.e. the vertically stacked arrangement of the first and second module in the first configuration of the passenger seat and the side-by-side arrangement of the first and second module in the second configuration of the passenger seat, are intuitive to a passenger such that the passenger can manually arrange the first and second modules relative to each other accordingly to implement the first or second configuration of the passenger seat and thus, to prepare the passenger seat for sitting by providing a sitting surface in the first configuration or for lying by providing a lying surface in the second configuration, respectively.

As the above-specified construction of the passenger seat enables, e.g. by the passenger or an assistant, manually transferring the passenger seat in its respective first and second configurations without the requirement of actuating drive devices including motors, related drive elements, etc., control units, etc., the weight of the passenger seat can be significantly reduced when compared to conventional passenger seats. The passenger seat thus, has a light constructive design. Also, due to the omission of drive devices including motors, related drive elements, etc., control units, etc., additional usable (living) space for the passenger and additional stowage areas can be created, e.g. under the first and second modules, as will be set forth further below.

Hence, an improved passenger seat for a vehicle, particularly for an aircraft, is provided which has a lightweight constructive design, offer more usable space for a passenger, and enables easy and intuitive options for configuration changes which can be manually implemented by a passenger.

Exemplary and thus, non-limiting embodiments of the passenger seat, which can be arbitrarily combined with each other, will be explained in the following:
In an exemplary embodiment of the passenger seat, each of the first module and the second module can comprise a first surface and, particularly opposite to the first surface,
a second surface. Given this configuration of each of the first and the second modules, the following can apply with respect to the first and second configuration of the passenger seat:

In the first configuration of the passenger seat, the first surface of the first module can provide the support surface for the second module such that the first surface of the first module supports the second surface of the second module. The first surface of the first module is thus, directly opposite the second surface of the second module. The second surface of the second module can provide the sitting surface for a passenger in this exemplary embodiment.

In the first configuration of the passenger seat, the first surface of the first module can be oriented upward, i. e. facing away from an underground, e.g. the floor of a passenger cabin of a vehicle which is provided with the passenger seat, on which the passenger seat is installed. As such, the first surface of the first module can comprise a surface, namely the support surface, on which the second module can be supported in the first configuration of the passenger seat. The second surface of the first module can be oriented downward, i. e. facing towards an underground, e.g. the floor of a passenger cabin of a vehicle which is provided with the passenger seat, on which the passenger seat is installed. As such, the second surface of the first module cannot comprise a surface on which the second module can be supported in the first configuration of the passenger seat. Yet, the second surface of the first module can be arranged to delimit, particularly together with a respective underground, a stowage volume beneath at least the first module in the first configuration of the passenger seat.

In the first configuration of the passenger seat, the first surface of the second module can be oriented upward, i. e. facing away from an underground, e.g. the floor of a passenger cabin of a vehicle which is provided with the passenger seat, on which the passenger seat is installed. As such, the first surface of the second module can comprise a freely exposed surface on which a passenger can sit in the first configuration of the passenger seat. The second surface of the second module can be oriented downward, i. e. facing towards an underground, e.g. the floor of a passenger cabin of a vehicle which is provided with the passenger seat, on which the passenger seat is installed. As such, the second surface of the second module cannot comprise a freely exposed surface on which a passenger can sit in the first configuration of the passenger seat.

In the second configuration of the passenger seat, the first surface of the first module can provide the or a first part of a lying surface for a passenger and the first surface or the second surface of the second module can provide the second part of the lying surface for a passenger.

In the second configuration of the passenger seat, the first surface of the first module can be oriented upward, i. e. facing away from an underground, e.g. the floor of a passenger cabin of a vehicle which is provided with the passenger seat, on which the passenger seat is installed. As such, the first surface of the first module can comprise a freely exposed surface, namely the first part of the lying surface, on which a passenger can lie in the second configuration of the passenger seat. The second surface of the first module can still be oriented downward, i. e. facing towards an underground, e.g. the floor of a passenger cabin of a vehicle which is provided with the passenger seat, on which the passenger seat is installed. Hence, the first surface of the first module provides a surface on which the second module can be supported in the first configuration of the passenger seat and a surface, namely the first part of the lying surface, on which a passenger can lie in the second configuration of the passenger seat. As such, the second surface of the first module cannot comprise a freely exposed surface on which a passenger can sit in the first configuration of the passenger seat (and no surface on which a passenger can lie in the second configuration of the passenger seat either). Yet, the second surface of the first module can still be arranged to delimit, particularly together with a respective underground, a stowage volume beneath at least the first module in the first and second configuration of the passenger seat.

With respect to the second module, two exemplary options are particularly conceivable in connection with the second configuration of the passenger seat in this exemplary embodiment; the second module can therefore, also be deemed or denoted a "multi-function module":

In a first exemplary option, the first surface of the second module can be oriented upward in the second configuration of the passenger seat, i. e. facing away from an underground, e.g. the floor of a passenger cabin of a vehicle which is provided with the passenger seat, on which the passenger seat is installed. As such, the first surface of the second module can comprise a freely exposed surface, namely the second part of the lying surface, on which a passenger can lie in the second configuration of the passenger seat. In the first exemplary option, the second surface of the second module can be oriented downward, i. e. facing towards an underground, e.g. the floor of a passenger cabin of a vehicle which is provided with the passenger seat, on which the passenger seat is installed. As such, the second surface of the second module cannot comprise a freely exposed surface on which a passenger can lie in the second configuration of the passenger seat in the first exemplary option. Hence, the first surface of the second module can provide both a surface on which a passenger can sit in the first configuration of the passenger seat and a surface, namely the second part of the lying surface, on which a passenger can lie in the second configuration of the passenger seat.

In a second exemplary option, the second surface of the second module can be oriented upward in the second configuration of the passenger seat, i. e. facing away from an underground, e.g. the floor of a passenger cabin of a vehicle which is provided with the passenger seat, on which the passenger seat is installed. As such, the second surface of the second module can comprise a freely exposed surface, namely the second part of the lying surface, on which a passenger can lie in the second configuration of the passenger seat. As such, the second surface of the second module can provide, in the second configuration of the passenger seat, the second part of the lying surface for a passenger in this exemplary option. In the second exemplary option, the first surface of the second module can be oriented downward, i. e. facing towards an underground, e.g. the floor of a passenger cabin of a vehicle which is provided with the passenger seat, on which the passenger seat is installed. As such, the first surface of the second module cannot comprise a freely exposed surface on which a passenger can lie in the second configuration of the passenger seat in the second exemplary option. Hence, the first surface of the second module can provide a surface on which a passenger can sit in the first configuration of the passenger seat and the second surface of the second module provides a surface, namely the second part of the lying surface, on which a passenger can lie in the second configuration of the passenger seat.

In either exemplary embodiment, the lying level plane of the lying surface provided by the passenger seat in the second configuration can be below the sitting level plane of the sitting surface provided by the passenger seat in the first configuration which can also create more lying space for a passenger and thus, increase comfort.

In a further exemplary embodiment of the passenger seat, at least the second module can be transferrable, by moving same in at least one degree of freedom of motion, in a first state or a first orientation, respectively in which its first surface is freely exposed such that it provides the or at least part of the sitting surface for a passenger in the first configuration of the passenger seat, and in a second state or second orientation, respectively in which its second surface is freely exposed such that it provides the second part of the lying surface for a passenger in the second configuration of the passenger seat. Hence, at least the second module can generally be moveable or moveably supported to transfer it, by moving it in at least one degree of freedom of motion, in a respective first state or first orientation in which it provides the or at least part of the or a sitting surface for a passenger in the first configuration of the passenger seat, and in a second state or second orientation, respectively in which its second surface is freely exposed such that it provides the second part of the lying surface for a passenger in the second configuration of the passenger seat.

Particularly, the at least one degree of freedom of motion can be or comprise a rotational motion, particularly a pivot motion, about a rotation axis, particularly about a pivot axis. The rotation axis, particularly the pivot axis, can be a horizontal axis transverse to the longitudinal axis of the passenger seat, for example. Hence, transferring the second module from its first state or first orientation into its second state or second orientation, or vice versa, can be effected by a rotational motion, particularly a pivot motion, of the second module. A respective rotational or pivot motion can enable that the first surface of the second module is freely exposed in the first configuration of the passenger seat and that the second surface of the second module is freely exposed in the second configuration of the passenger seat. As such, a respective rotational or pivot motion can substantially comprise flipping the second module such that either of its surfaces is substantially flipped when the second module is transferred from its first state or orientation in its second state or orientation (and vice versa). Particularly, the first surface of the second module can be oriented upward in the first state or orientation and downward in the second state or orientation and the second surface of the second module can be oriented downward in the first state or orientation and upward in the second state or orientation. Yet, the level of the freely exposed surface provided by the first surface in the first state or orientation, which is, as is apparent from above, typically correlated with the first configuration of the passenger seat, is typically higher than the level of the freely exposed surface provided by the second surface in the second state or orientation, which is, as is apparent from above, typically correlated with the second configuration of the passenger seat.

In further exemplary embodiments of the passenger seat, the second module can be, directly or indirectly, moveably connected to the first module, particularly to move it, e.g. by rotating or pivoting, in the respective first and/or second state or orientation. A respective connection can generally, comprise at least one of: a force-fit connection, e.g. by bolting, sewing, stitching, a form-fit connection, e.g. by snapping, hook and loops, etc. and an adherence-fit connection, e.g. by gluing or welding. Particularly, the moveable connection can comprise the at least one degree of freedom of motion, particularly the or a rotational degree of motion, in which the second module can be transferred in its respective first and second state. More particularly, the first module can be provided with or comprise one or more one- or multi-dimensional connection sites which enable pivotably connecting the second module to the first module. Hence, the second module can be provided with one or more corresponding one- or multi-dimensional connection sites. In such a manner, the second module can be pivoted relative to the first module via the interaction of respective one or more one- or multi-dimensional connection sites of the first and second module. As such, respective one or more connection one- or multi-dimensional connection sites of the first and/or second module can also define a rotation axis or pivot axis about which the second module can be pivoted relative to the first module (which is typically, static). As an example, respective one- or multi-dimensional connection sites of the first and/or second module can be provided as or form part of one or more hinge devices, for instance. Respective hinge devices can be built by or comprise mechanical hinge elements, for example. Respective hinge devices can also be built by or comprise hinge elements formed by sewing or stitching, e.g. via a sewing or stitching seam, as the connection between the first module and the second module can be realized by sewing or stitching, respectively. As an example, respective one or more one- or multi-dimensional connection sites of the first module can be provided with a free end of the first module which faces, in the second configuration of the passenger seat, towards a free end of the lying surface of the passenger seat at which a passenger would place his feet when lying on the passenger seat in the intended manner. As an example, respective one or more one- or multi-dimensional connection sites of the second module can be provided with a free end of the second module which faces, in the first configuration of the passenger seat, towards the free end of the lying surface of the passenger seat at which the passenger would place his feet when lying on the passenger seat in the intended manner.

Yet, it is also conceivable that the second module can be, directly or indirectly, moveably connected to a structural element of the passenger seat (which is or can be different from the first module), wherein the moveable connection can comprise the at least one degree of freedom of motion, particularly the or a rotational degree of motion, in which the at least one second module can be transferred in its respective first and second state or orientation. More particularly, the respective structural element of the passenger seat, which can be an element of a frame structure of the passenger seat, for instance, can be provided with or comprise one or more one- or multi-dimensional connection sites which enable pivotably connecting the second module to the structural element. Hence, the structural element can be provided with one or more corresponding one- or multi-dimensional connection sites. In such a manner, the second module can be rotated or pivoted relative to the structural element via the interaction of respective one or more one- or multi-dimensional connection sites of the structural element and the second module. As such, respective one or more connection one- or multi-dimensional connection sites of the structural element and/or the second module can also define a pivot axis about which the second module can be pivoted relative to the structural element (which is typically, static). As an example, respective one- or multi-dimensional connection sites of the structural element and/or the second module can be provided as or form part of one or more hinge devices, for instance. Respective hinge devices can be built by or comprise mechanical hinge elements, for example. Respective hinge devices can also be built by or comprise hinge elements formed by sewing or stitching, e.g. via a sewing or stitching seam, as the connection between the structural element and the second module can be realized by sewing or stitching, respectively. As an example, respective one or more one- or multi-dimensional connection sites of the structural element can be provided with a free end of the structural element which faces, in the second configuration of the passenger seat, towards a free end of the lying surface of the passenger seat at which a passenger would place his feet when lying on the passenger seat in the intended manner. As an example, respective one or more one- or multi-dimensional connection sites of the second module can be provided with a free end of the second module which faces, in the first configuration of the passenger seat, towards the free end of the lying surface of the passenger seat at which the passenger would place his feet when lying on the passenger seat in the intended manner.

In further exemplary embodiments of the passenger seat, at least the second module can comprise at least one gripping portion which can be gripped by a passenger for transferring the second module from the first state or orientation to the second state or orientation, or vice versa. A respective gripping portion can be or comprise any portion of the second module which can be gripped, e.g. by a passenger, for transferring the second module, e.g. via a respective rotational or pivot motion as specified above, from the first state or orientation to the second state or orientation, or vice versa. Non-limiting examples of a respective gripping portion can comprise one or more gripping elements, such as e.g. a flap, a handle, a lever, etc. attached to the or a base body of the second module and/or one or more gripping elements, such as e.g. edges, projections, recesses, etc. provided with the or a base body of the second module, e.g. by providing the base body of the second module with a specific shape, e.g. comprising edges, projections, recesses, etc., which form(s) one or more gripping elements. As such, respective gripping elements can be integrally formed with the or a base body of the second module.

In further exemplary embodiments of the passenger seat, the passenger seat can comprise one or more modules in addition to the first and second module as will be more apparent from the below examples:
As a first example, the passenger seat can further comprise a third module which is configured to provide a backrest for a passenger, particularly a backrest with lumbar support, in the first configuration of the passenger seat, and/or which provides a pillow for a passenger in the second configuration of the passenger seat. The third module can be a module which is not statically attached to the first and/or second module. This does not exclude that the third module can be, e.g. via hook and loop connectors provided with at least one surface of the third module, temporarily attached to the first and/or second module. More particularly, the third module can be arbitrarily positioned on a surface of the first and/or the second module which makes it possible to use the third module, in the first configuration of the passenger seat, as a respective backrest, and, in the second configuration of the passenger seat, as a pillow. As such, also the third module can be provided with a three-dimensional contour, particularly an ergonomic contour, provided with a respective first and/or second surface thereof to improve the comfort in the first or second configuration of the passenger seat. Also, the third module can be built by or comprise one or more cushion elements, such as e.g. cushioning layers, made from a cellular material or material structure, such as e.g. a foam or foam structure, for instance.

As a second example, the passenger seat can further comprise a fourth module which is configured to provide a footrest for a passenger at least in the second configuration of the passenger seat. The fourth module can thus, be deemed an ottoman module. The fourth module can be a module which is statically attached to at least part of a frame structure of the passenger seat. The fourth module can be positioned substantially lateral to the first and/or second module. With respect to an arrangement of multiple passenger seats, the fourth module of a first passenger seat can be positioned adjacent to a free end of the second module of a second passenger seat, wherein the free end of the second module faces, in the second configuration of the second passenger seat, towards the free end of the lying surface of the second passenger seat at which the passenger would place his feet when lying on the passenger seat in the intended manner. As such, the fourth module can even provide the or a surface on which a passenger would place his feet at least in the second configuration of the passenger seat when lying on the passenger seat in the intended manner. However, the passenger can generally also place his feet on the fourth module in the first configuration of the passenger seat. Also the fourth module can be provided with a three-dimensional contour, particularly an ergonomic contour, provided with at least one surface thereof to improve the comfort in the first or second configuration of the passenger seat. Also, the fourth module can be built by or comprise one or more cushion elements, such as e.g. cushioning layers, made from a cellular material or material structure, such as e.g. a foam or foam structure, for instance.

In further exemplary embodiments of the passenger seat, a gap space can be created between the fourth module and the second module, particularly between opposing ends or sides of the fourth module and the second module, in the first configuration of the passenger seat, i.e. typically, when the second module is in the first state or orientation, which gap space can be closed in the second configuration of the passenger seat, i.e. typically, when the second module is in the second state or orientation or when the second module is being transferred to the second state or orientation, respectively. A respective gap space can facilitate easy entry and exit of the passenger seat in the first configuration and enable easy access to possible stowage areas provided by the passenger seat.

In further exemplary embodiments of the passenger seat, the first surface of at least one of the first module and/or the second module can be provided with a three-dimensional contour, particularly an ergonomic contour, for supporting a body part of a passenger, e.g. a part of the buttocks of a passenger who is sitting on the passenger seat in the first configuration or a part of the upper body of a passenger who is lying on the passenger seat in the second configuration. With respect to the second module, particularly the surface which is freely exposed in the first configuration of the passenger seat, which is typically the first surface of the second module, can be provided with a respective three-dimensional contour which improves the comfort of sitting on the passenger seat in the first configuration.

In either exemplary embodiment of the passenger seat, the first and/or second surface of the first and/or second module can generally have a substantially rectangular base shape.

Additionally or alternatively, the second surface of at least one of the first module and/or the second module can be provided with a three-dimensional contour, particularly an ergonomic contour, for supporting a body part of a passenger, particularly a part of the upper body of a passenger, lying on the second surface. With respect to the first module, particularly the surface which is freely exposed in the second configuration of the passenger seat, which is typically the first surface, can be provided with a respective three-dimensional contour which improves the comfort of lying on the passenger seat in the second configuration. Likewise, with respect to the second module, particularly the surface which is freely exposed in the second configuration of the passenger seat, which can be either the first or the second surface, can be provided with a respective three-dimensional contour which improves the comfort of lying on the passenger seat in the second configuration.

In further exemplary embodiments of the passenger seat, at least the first module, the second module, and the fourth module can be configured to provide a substantially plane, particularly substantially continuous, lying surface for a passenger in the second configuration of the passenger seat. Particularly, the substantially plane lying surface can be realized by a side-by-side arrangement of the first module, the second module, and the fourth module in or parallel to a reference axis, particularly the or a longitudinal axis of the passenger seat. Particularly, the first module, the second module, and the fourth module can be arranged in a common plane which extends in or parallel to a reference axis, particularly the or a longitudinal axis of the passenger seat. The substantially plane lying surface can form the or at least part of the lying surface provided by the passenger seat in the second configuration. The substantially plane lying surface can therefore, extend parallel to a horizontal (reference) plane which can be the floor of a vehicle, particularly an aircraft, in which the passenger seat is installed.

In further exemplary embodiments of the passenger seat, the substantially plane lying surface provided by at least the first module, the second module, and the fourth module can have a longitudinal extension of at least 160 cm, particularly at least 170 cm, more particularly at least 180 cm, more particularly at least 190 cm. As such, the longitudinal extension of the lying surface enables that a passenger can have sufficient least that an adult person can find a comfortable lying position in the second configuration of the passenger seat. The width of the substantially plane lying surface can vary along its longitudinal extension. Yet, the minimum width of the substantially plane lying surface can be at least 30 cm. Typically, the fourth module can provide a portion of the substantially plane lying surface which has the smallest width.

As indicated above, in the first configuration of the passenger seat, the passenger seat provides a sitting surface for a passenger, wherein the sitting surface comprises a sitting level plane, and in the second configuration of the passenger seat, the passenger seat provides a lying surface for a passenger, wherein the lying surface comprises a lying level plane, wherein the lying level plane is different from the sitting level plane, particularly lower than the sitting level plane. This creates the possibility to create more space for the longitudinal extension of the lying surface in the second configuration of the passenger seat and thus, contributes to more comfort.

In further exemplary embodiments of the passenger seat, the passenger seat comprises a housing structure which at least partially houses at least the first module and the second module at least in the first configuration of the passenger seat. The housing structure can comprise one or more walls extending in a substantially vertical direction, particularly to create a privacy space for a passenger of the passenger seat. In the first configuration of the passenger seat, the vertical extension of the housing structure can be at least 40 cm, particularly at least 50 cm, more particularly at least 60 cm, more particularly at least 70 cm, more particularly at least 80 cm, with respect to the freely exposed surface of the second module such that most parts of at least the upper body of a passenger are surrounded by the housing structure. Particularly, the housing structure can have a U-shaped base shape, particularly in a cross-sectional view, such that a passenger is at least partially nested within the privacy space created by the housing structure in at least two spatial directions.

In further exemplary embodiments of the passenger seat, the housing structure can comprise a shell element and a backrest element which is at least partially surrounded by the shell element. The housing structure can thus, comprise a two-part design which enables providing the housing structure with additional functionalities. Particularly, the shell element can provide a connection functionality via which the housing structure can be connected with a frame structure of the passenger seat and the backrest element can provide a backrest functionality via which the housing structure can provide one or more armrest and/or backrest portions. As such, the backrest element can comprise at least one of: one or more backrest surfaces for a passenger of the passenger seat and/or one or more armrest surfaces for a passenger of the passenger seat, particularly provided by projections, depressions, recesses, etc. within a base body of the backrest element. Respective backrest and/or armrest surfaces can be integral portions of at least the backrest element which can be created, e.g. by molding the backrest element.

Notably, the shell element can comprise the same or a similar base shape as the backrest element. The shell element can therefore, provide one or more support areas for at least partially supporting the backrest element. Particularly, due to the possibility of corresponding base shapes of the shell element and the backrest element, the shell element can provide mechanical support for the backrest element, e.g. one or more respective projections provided with the shell element can engage with corresponding recesses of the backrest element, or vice versa.

Thus, the shell element can comprise one or more first support portions, particularly provided as projections or recesses, for supporting the backrest element. Particularly, respective first support portions can provide interfaces for supporting the backrest element on the shell element. As indicated above, the shell element can provide mechanical support for the backrest element, e.g. respective projections provided with the shell element can engage with corresponding recesses of the backrest element, or vice versa. The shape of respective first support portions of the shell element can particularly, correspond to the shape of backrest and/or armrest surfaces of the backrest element such that respective first support portions of the shell element can provide support for respective backrest and/or armrest surfaces of the backrest element.

The shell element can further comprise one or more second support portions, particularly provided as projections or recesses, for supporting the shell element on a frame structure of the passenger seat. As such, respective second support portions can provide interfaces for supporting the shell element and the housing structure, respectively on a frame structure of the passenger seat. Respective interfaces cannot only provide support but can also enable a stable mechanical connection of the housing structure with the frame structure.

The backrest element can have a low wall thickness, e.g. of less than 1.5 cm, particularly less than 1 cm, which also reduces weight. As such, the backrest element can have a very low weight contributing to the lightweight construction of the passenger seat as indicated above. Yet, the backrest element can have high inherent flexibility and/or low inherent stiffness which requires direct or indirect additional mechanical support of the backrest element which can be provided, as will be apparent from further below, by a frame structure of the passenger seat.

At least the backrest element can be made of or comprise a soft material or soft material structure, such as e.g. fabric, leather, soft polymer, such as e.g. thermoplastic elastomers, etc., particularly in areas forming respective backrest and/or armrest surfaces. Additionally or alternatively, respective backrest and/or armrest surfaces can be provided with one or more cushion elements particularly with a removable dress cover.

The shell element can be at least partially, particularly completely, made of or comprise a flexible plastic element, particularly made from a thermoformed plastic sheet material.

The shell element can have a low wall thickness, e.g. of less than 1.5 cm, particularly less than 1 cm, which also reduces weight. As such, the shell element can have a very low weight contributing to the lightweight construction of the passenger seat as indicated above. Yet, the shell element can have high inherent flexibility and/or low inherent stiffness which requires direct or indirect additional mechanical support of the shell element which can be provided, as will be apparent from further below, by a frame structure of the passenger seat.

In further exemplary embodiments of the passenger seat, the passenger seat can further comprise a frame structure for supporting at least the first and second modules. As indicated above, the passenger seat can also comprise a housing structure in exemplary embodiments; in such exemplary embodiments with a housing structure, the frame structure can also support the housing structure. The frame structure is typically, made of a material or material structure having a low inherent flexibility and/or high inherent stiffness which provides structural support and enables that the frame structure can withstand forces and/or momentums, e.g. applied by the mass of a passenger of the passenger seat. As an example, the frame structure can be at least partially, particularly completely, made from metal, particularly light metal, more particularly aluminum or an aluminum alloy, or a metal or light metal structure, respectively. This provides both a contribution to the lightweight construction of the passenger seat and the required structural properties of the frame structure. Additionally or alternatively to metals, also other material groups, such as e.g. composite materials, particularly fiber-reinforced composite materials, are conceivable for forming the frame structure.

Notably, the frame structure can also be provided with or comprise one or more attachment interfaces for attaching a restraint device, such as e.g. a fastening belt, thereto. Respective attachment interfaces can particularly, be arranged at positions of the frame structure which enable the implementation of two-point- or three-point fastening belt. As such, two attachment interfaces can be arranged substantially in a common (substantially horizontal) plane, and an optional third attachment interface can be arranged in a position above the common (substantially horizontal) plane.

In further exemplary embodiments of the passenger seat, the frame structure can comprise a first frame structure device which comprises at least one first connection interface for connecting the first frame structure device to a vehicle, particularly an aircraft, and/or at least one second connection interface for directly or indirectly connecting the first frame structure device to the first and/or second module. Particularly, the first frame structure device can be configured to connect (and mechanically attach) the frame structure to a structural element of a vehicle, e.g. the ground of a part of a vehicle, via the at least one first connection interface. The at least one first connection interface can thus, comprise one or more connection elements, such as e.g. anchoring elements, enabling a stable mechanical connection with the structural element of a vehicle. A respective structural element of a vehicle can be or comprise connection interfaces, such as e.g. rails provided with a ground of a vehicle. For aircraft applications, respective connection interfaces can particularly, be or comprise connection rails provided for installing a passenger seat on the floor of a passenger cabin of the aircraft.

The first frame structure device can comprise one or more, particularly web-like, frame structure device elements which can be interconnected at defined connection points. Particularly, the first frame structure device can comprise first frame structure device elements which can be built as or comprise legs and which are provided with or comprise one or more connection elements, such as e.g. anchoring elements, which are configured to provide a stable mechanical connection with the structural element of a vehicle as specified above. Particularly, the first frame structure device can comprise one or more second frame structure device elements which can be built as or comprise arms which are provided with or comprise one or more connection elements, such as e.g. anchoring elements, which are configured to provide a stable mechanical connection with a second frame structure device of the frame structure. Particularly, the first frame structure device can comprise one or more third frame structure device elements which can be built as or comprise arms which are provided with or comprise one or more connection elements, such as e.g. anchoring elements, which are configured to provide a stable mechanical connection with a third frame structure device of the frame structure.

The first frame structure device can generally comprise an open frame design which such that the first frame structure device can also define, particularly together with the first module, a stowage area below the actual sitting surface of the passenger seat in the first configuration. This is not possible with conventional business-class seats as these comprise a closed shell design which does not allow for stowing items below the sitting surface.

In further exemplary embodiments of the passenger seat, the frame structure can comprise a second frame structure device which comprises at least one first connection interface for connecting the second frame structure device to the first frame device, and/or at least one second connection interface for connecting the second frame structure device to the or a respective housing structure. Particularly, the second frame structure device can be configured to connect (and mechanically attach) the second frame structure device to the first frame structure device via the at least one first connection interface. The at least one first connection interface can comprise one or more connection elements, such as e.g. force-fit- and/or form-fit elements, enabling a stable mechanical connection of the second frame structure device with the first frame structure device. Particularly, the second frame structure device can also be configured to connect (and mechanically) attach the second frame structure device to the or a respective housing structure, particularly the shell element of the or a respective housing structure, via the at least one second connection interface. The at least one second connection interface can comprise one or more connection elements, such as e.g. force-fit and/or form-fit elements, enabling a stable mechanical connection of the second frame structure device with the or a respective housing structure. As an example, the at least one second connection interface can at least comprise one or more engagement elements, such as e.g. projections, e.g. extending in one or more directions, which engage into corresponding engagement elements, e.g. extending in or more corresponding directions, such as e.g. depressions, recesses, etc., provided with the housing structure, particularly the shell element of the or a respective housing structure. Respective engagement elements provided with the second frame structure device and the or a respective housing structure, particularly the shell element of the or a respective housing structure, can extend, e.g. in the shape of line-shaped contours, e.g. straight and/or curved, in one or more spatial planes and/or in one or more spatial directions. Particularly, a multi-dimensional network of corresponding engagement elements is conceivable which provides multiple connection points and thus, results in a highly stable multi-dimensional connection between the second frame structure device and the housing structure.

Generally, the second frame structure device can comprise one or more first engagement elements providing, via engagement with corresponding engagement elements provided with the or a respective housing structure, particularly the shell element of the or a respective housing structure, one or more first engagement sites or interfaces for engaging with and thus, supporting the or a respective housing structure, particularly the shell element of the or a respective housing structure, in a first spatial direction, particularly comprising a horizontal spatial direction, and one or more second engagement elements providing, via engagement with corresponding engagement elements provided with the or a respective housing structure, particularly the shell element of the or a respective housing structure, one or more second support sites or interfaces for engaging with and thus, supporting the or a respective housing structure, particularly the shell element of the or a respective housing structure, in a second spatial direction, particularly comprising a vertical spatial direction.

As is apparent from above, the connection between the second frame structure device and the or a respective housing structure, particularly the shell element of the or a respective housing structure, can particularly, comprise a form fit-connection due to the interaction of respective engagement elements provided with the second frame structure device and corresponding engagement elements provided with the or a respective housing structure, particularly the shell element of the or a respective housing structure, which are configured engage with each other thereby, creating the above-mentioned multiple connection points and the multi-dimensional connection, respectively.

Generally, the second frame structure device can comprise one or more, particularly web-like, frame structure device elements which can be interconnected at defined connection points. The second frame structure device can thus, generally comprise an open frame design which can enable that the second frame structure device can also define a stowage area behind the actual sitting surface of the passenger seat in the first configuration. This is not possible with conventional business-class seats as these comprise a closed shell design.

Particularly, the second frame structure device can comprise a design or shape of a frame of a chair (chair frame) which comprises one or more segments extending in different spatial directions and being connected at one or more connection nodes. One, more or all of the segments can form or be provided with respective engagement elements configured to engage with corresponding engagement elements provided with the or a respective housing structure, particularly the or a shell element of the or a respective housing structure. The design or shape of the second frame structure device can thus, be lightweight while it still provides sufficient structural stability for the above-explained connecting and supporting functions.

In further exemplary embodiments of the passenger seat, the passenger seat can comprise a third frame structure device which can comprise one or more supporting elements providing one or more support sites or interfaces for supporting at least one functional device, particularly a table device including at least one table surface, wherein the at least one functional device can be transferred, e.g. by moving same in at least one degree of freedom of motion, into at least two different configurations. Each of the at least two configurations can referto a specific orientation and/or position of the at least one functional device.

At least one of the at least two different configurations can be a configuration in which a passenger can use the at least one functional device when sitting in the first configuration of the passenger seat. As such, at least one configuration can comprise a first orientation and/or position of the at least one functional device close to a body of the passenger when sitting in the first configuration of the passenger seat; this first orientation and/or position can enable that the passenger can use the at least one functional device e.g. as a support table e.g. for a laptop, a plate, etc. In other words, in the first orientation and/or position, the at least one functional device can allow that the passenger puts items on the at least one functional device and e.g. works, eats, drinks, etc. using the at least one functional device while sitting. As a concrete, yet non-limiting example, the at least one functional device can be arranged at least partially above the second module in a respective first orientation and/or position.

At least one other of the at least two different configurations can be a configuration in which a passenger can use the at least one functional device when lying in the second configuration of the passenger seat. As such, at least one configuration of the at least one functional device can comprise a second orientation and/or position of the at least one functional device close to a body of the passenger when lying in the second configuration of the passenger seat; this second orientation and/or position can enable that the passenger can use the at least one functional device as a stowage surface e.g. for stowing items, belongings, etc. In other words, in the second orientation and/or position, the at least one functional device can enable the passenger to stow items on a stowing surface of the at least one functional device. The stowing surface of the at least one functional device in the second orientation and/or position can enable that the passenger can, while lying on the lying surface, (still) use an item, such as e.g. an electronic device, such as e.g. a smartphone, laptop, tablet, etc., e.g. for consuming media, e.g. watching media content output via a respective electronic device. As a concrete, yet non-limiting example, the at least one functional device can be at least partially arranged above the or a respective fourth module in a respective second orientation and/or position.

Changes of the orientation and/or position of the at least one functional device for transferring it into respective configurations can be implemented by transferring the at least one functional device in different orientations and/or positions relative to the third frame structure device, for example. The third frame structure device can thus, comprise one or more interfaces which can co-act with corresponding interfaces provided with the at least one functional device. Respective corresponding interfaces can comprise one or more form-fit elements, such as e.g. plug- and/or corresponding socket-elements, which enable attaching the at least one functional device to the third frame structure device at different orientations and/or positions.

Additionally or alternatively, changes of the orientation and/or position of the at least one functional device for transferring it into respective configurations can be implemented by moving the at least one functional device in at least one degree of freedom of motion to transfer the at least one functional device in different orientations and/or positions relative to the third frame structure device. A respective degree of freedom of motion can be or comprise a translational degree of freedom of motion along a translation axis, e.g. enabling sliding the at least one functional device along a sliding axis, and/or a rotational degree of freedom of motion about a rotation axis particularly a pivoting degree of freedom of motion about a pivot axis, e.g. enabling pivoting the at least one functional device about a pivot axis. A respective translation axis or sliding axis can extend parallel to the longitudinal axis of the passenger seat, for example. A respective rotation or pivot axis can extend transverse to the longitudinal axis of the passenger seat, for example. Each of a respective translation axis and/or a respective rotation or pivot axis can be defined by the third frame structure device, for example. The third frame structure device can thus, comprise one or more interfaces which can co-act with corresponding interfaces provided with the at least one functional device. Respective corresponding interfaces can comprise one or more form-fit elements, such as e.g. plug- and/or corresponding socket-elements, which enable moveably supporting or moving, e.g. via sliding, pivoting, etc., the at least one functional device at the third frame structure device in the at least one degree of freedom of motion.

In further exemplary embodiments of the passenger seat, the at least one functional device can be attached to the third frame structure device via detachable or non-detachable attachment means. As such, it is conceivable that the at least one functional device can be transferred into respective configurations by de-attachment from defined first attachment portions provided with the third frame structure device and re-attachment to defined other attachment portions provided with the third frame structure device; each attachment portion can thus, be correlated with a specific orientation and/or position of the at least one functional device relative to the third frame structure device. As an example, respective attachment portions can be provided along a longitudinal axis of the passenger seat (which can correspond to the longitudinal axis of the lying surface of the passenger seat in the second configuration).

In further exemplary embodiments of the passenger seat, the at least one functional device can be transferrable in the at least two different configurations by moving same in at least one degree of freedom of motion which comprises a translational degree of freedom of motion in which the at least one functional device can be moved in a first position in which it can be used in the first configuration of the passenger seat, particularly by a passenger using the passenger seat in the first configuration, and in a second position in which the at least one functional device is at least partially received in a, particularly slot-like shaped, receiving portion of the or an adjacent passenger seat.

In further exemplary embodiments of the passenger seat, the third frame structure device can comprise one or more, particularly web-like, frame structure device elements which can be interconnected at defined connection points. The third frame structure device can thus, generally comprise an open frame design which enables that the third frame structure device can also define, e.g. together with the or a respective fourth module, a stowage area.

In further exemplary embodiments of the passenger seat, the third frame structure device can be connected to the first and/or second frame structure device which can provide the overall frame structure with enhanced stability. Yet, it is also conceivable that the third frame structure device can be independent from the first and/or second frame structure device, i.e. not connected with the first and/or second frame structure device. In either case, the third frame structure device can comprise at least one connection interface which can comprise one or more connection elements, such as e.g. anchoring elements, which can enable a stable mechanical connection with a structural element of a vehicle on which the passenger seat is installed. A respective structural element of a vehicle can be or comprise connection interfaces, such as e.g. rails provided with a floor of the vehicle. For aircraft applications, respective connection interfaces can particularly, be or comprise connection rails provided for connecting a passenger seat to the floor of a passenger cabin of the aircraft.

In further exemplary embodiments of the passenger seat, the passenger seat can comprise at least one first stowing area or stowage volume which is arranged below the at least one functional device, particularly below a motion axis, particularly a translation axis, in which the at least one functional device is moveable between a respective first and second orientation and/or position. The at least one first stowage area can thus, generally be provided with the third frame structure device. The at least one first stowage area can comprise an upright cuboid stowage volume, for example. The at least one first stowage area can be closeable with a lid element which can be arranged in a vertical plane. The at least one first stowing area can comprise one or more mechanical and/or electrical and/or electronic interfaces for an item stowed therein. It is also conceivable that the passenger seat comprises multiple respective first stowage areas in a side-by-side arrangement, e.g. arranged substantially along the longitudinal axis of the passenger seat.

In further exemplary embodiments of the passenger seat, the passenger seat can comprise at least one second stowing area or stowage volume which can comprise a freely exposed substantially horizontally extending stowing surface. Particularly, the stowing surface can be arranged in a (common) plane with a table device. The at least one second stowage area can thus, generally be provided with the third frame structure device. The stowing surface can particularly, be arranged on a side of a portion of the third frame structure device which is opposite to a side of the third frame structure device which comprises a support of the or a respective functional device, particularly a table device. The stowing surface can comprise a triangular base shape, for example. Notably, the hypotenuse of the triangle forming the triangular base shape can extend at an acute angle relative to the longitudinal axis of the passenger seat. A respective triangular base shape can contribute to a small "geometric footprint" of the passenger seat which particularly, enables compact arrangements of multiple passenger seats. A substantially extending vertically extending privacy element, such as. e.g. a vertically extending wall element, can be provided with a rear free end of the stowing surface to avoid that a rear passenger has access to the stowing surface.

In further exemplary embodiments of the passenger seat, the passenger seat can comprise at least one third stowage area or stowage volume which can be arranged adjacent the first or second module. Notably, the at least one third stowage area can be closeable with at least one lid element which can be arranged in a plane coinciding with the freely exposed surface of the first module in the second configuration of the passenger seat or with the freely exposed surface of the second module in the first configuration of the passenger seat. Particularly, the at least one third stowage area can be provided in the region of a headrest in the second configuration of the passenger seat such that the passenger can lie close to his personal belongings stowed in the at least one third stowage area, for example. The at least one third stowage area can thus, generally be provided with the first or second frame structure device.

As indicated above, at least one additional stowage area or stowage volume can be provided beneath the first module. As indicated above, such a stowage area or stowage volume, respective can be defined by the second surface of the first module which can be arranged to delimit, particularly together with a respective underground, a stowage volume beneath at least the first module in the first configuration of the passenger seat.

A second aspect of the invention relates to a passenger seat arrangement for a vehicle, particularly an aircraft, which comprises multiple passenger seats according to the first aspect of the invention. Consequently, all remarks made in connection with the passenger seat of the first aspect of the invention also apply to the passenger seat arrangement of the second aspect of the invention. The arrangement of the passenger seats of the passenger seat arrangement can be generally freely chosen (and will typically, be chosen under consideration of the available space in a respective vehicle. As an example, two or more passenger seats can be arranged in a lateral side-by-side arrangement and/or in a longitudinal arrangement (one after the other).

A third aspect of the invention relates to a vehicle, particularly an aircraft, more particularly a commercial aircraft which comprises one or more passenger cabins. The vehicle comprises one or more passenger seats according to the first aspect of the invention or one or more passenger seat arrangements according to the second aspect of the invention. Consequently, all remarks made in connection with the passenger seat of the first aspect of the invention also apply to the vehicle of the third aspect of the invention.

Following is a description by way of example only with reference to the accompanying drawings of exemplary embodiments of the present invention in which:
Fig.1 - 6 each shows, in different views, a principle a drawing of a passenger seat in accordance with an exemplary embodiment in a first configuration;
Fig. 7 - 9 each shows, in different views, a principle a drawing of a passenger seat in accordance with an exemplary embodiment in a second configuration;
Fig. 10 is an exploded view of a passenger seat in accordance with an exemplary embodiment;
Fig. 11 is a rear perspective view of a passenger seat in accordance with an exemplary embodiment; and
Fig. 12 is a principle drawing of a passenger seat arrangement in accordance with an exemplary embodiment.

The Fig. generally show an exemplary embodiment of a passenger seat 100 for a vehicle, particularly for an aircraft, more particularly for a commercial aircraft. As such, the passenger seat 100 is particularly, to be installed in an aircraft. However, the passenger seat 100 can generally also be installed in other types of vehicles, such as e.g. vehicles which move on a ground, such as cars, buses etc., or vehicles which move on water, such as boats, ships, etc.

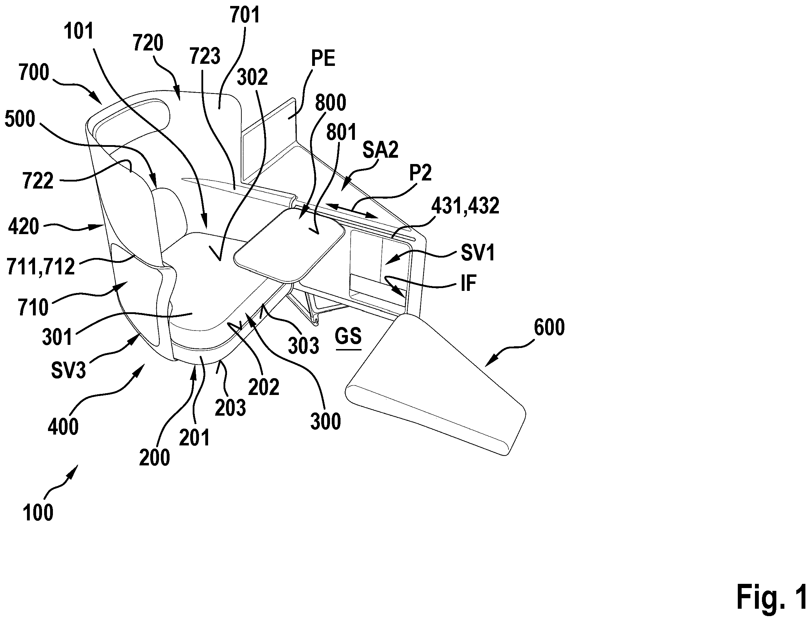

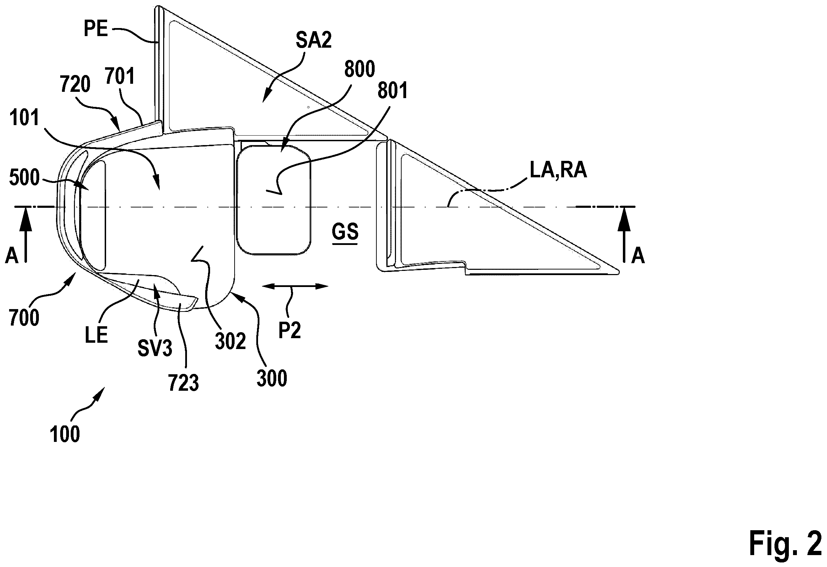

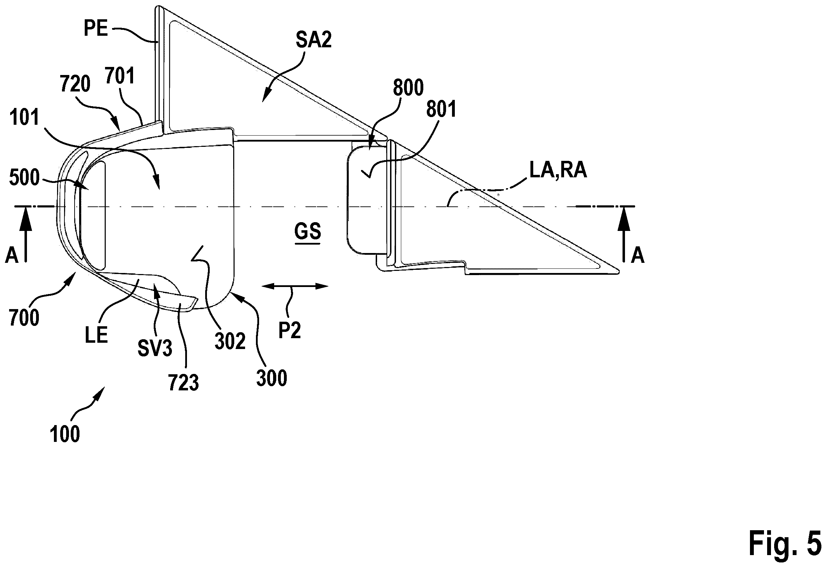

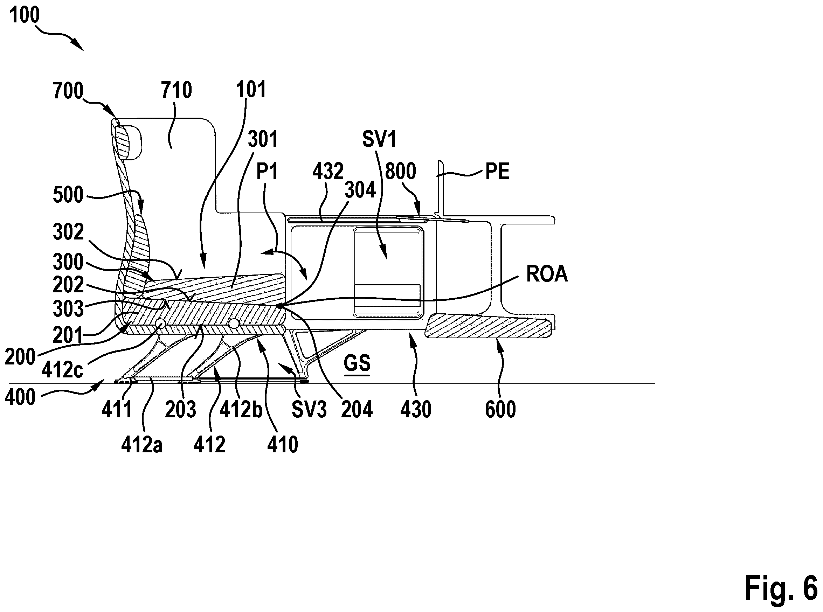

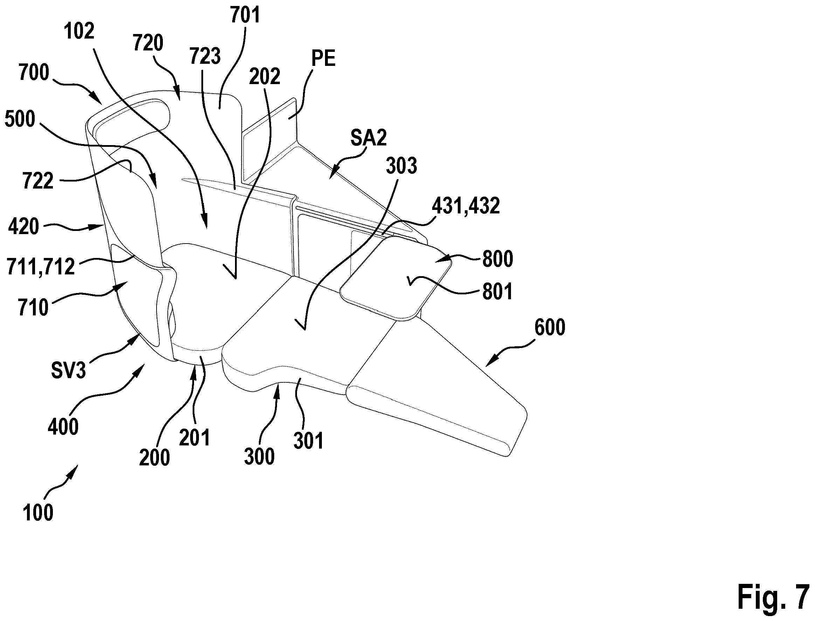

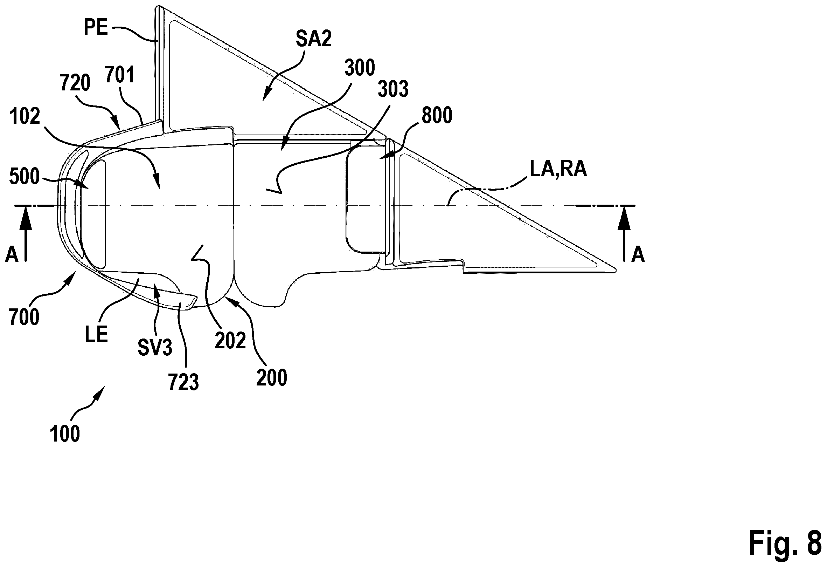

The passenger seat 100 is, particularly reversibly, transferrable in a first configuration (see Fig. 1 - 6) in which it provides a sitting surface 101 on which a passenger can sit and in a second configuration (see Fig. 7 - 9) in which it provides a lying surface 102 on which a passenger can lie, particularly with his/her body being fully stretched out. As such, the passenger seat 100 can be transferred into two different configurations, wherein, in the first configuration, the passenger seat 100 provides a sitting surface 101 on which a passenger can sit (sitting configuration), and, in the second configuration, the passenger seat 100 provides a lying surface on which a passenger can lie, particularly with his/her body being fully stretched out (lying configuration). In the second configuration of the passenger seat 100, the passenger seat 100 thus, provides the lying surface 102 which enables that an (adult) person can (substantially) completely recline on the lying surface 102, particularly such that the longitudinal axis LA of the passenger seat 100 is (substantially) parallel to a horizontal reference axis RA (see the top view of Fig. 2) or plane which can be an underground, such as e.g. the floor of a vehicle in which the passenger seat 100 is installed.

The passenger seat 100 is therefore, particularly suitable for being used as a so-called business class seat of an aircraft as respective business-class seats are typically, transferrable in respective first and second configurations.

The passenger seat 100 comprises at least a first module 200 and a second module 300. Each of the first and second modules 200, 300 can comprise a base body 201, 301. A respective base body 201, 301 can generally have a cuboid- or cuboid-like base shape, for instance. As will be apparent from the following, each of the first and second modules 200, 300 can be provided with or can comprise one or more cushion elements, such as e.g. cushioning layers, made from a cellular material or material structure, such as e.g. a foam or foam structure, for example. Respective one or more cushion elements can provide a support for a passenger who is at least partially sitting or lying on the respective module 200, 300. At least with respect to the second module 300, several cushion elements may be provided, particularly in a vertically stacked arrangement, e.g. such that at least one first cushion element can provide a support for a passenger who is sitting on the second module 300 in the first configuration of the passenger seat 100 and at least one second cushion element can provide a support for a passenger who is at least partially lying on the second module 300 in the second configuration of the passenger seat 100, for example.

The first and second modules 200, 300 are generally configured to co-act in the first and second configuration of the passenger seat 100 in a specific manner which is specified in more detail in connection with the exemplary embodiments shown in the Fig.:
In the first configuration of the passenger seat 100 (see Fig. 1 - 6), the first module 200 provides a support surface for supporting the second module 300 and the second module 300 provides a sitting surface for a passenger.

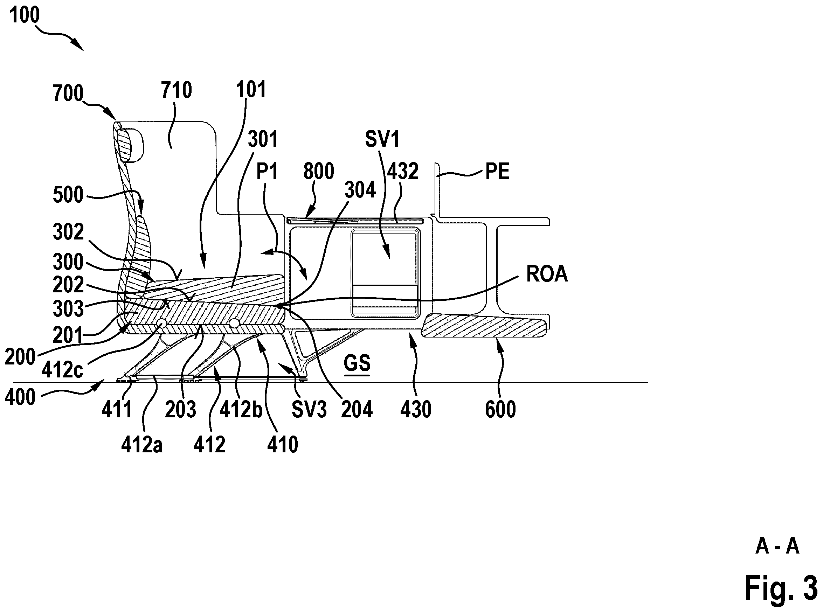

As is apparent from Fig. 1 - 6, the sitting surface provided by the second module 300 thus, forms a part, particularly a direct part, of the sitting surface 101 provided by the passenger seat 100 in the first configuration. Particularly, the sitting surface provided by the second module 300 in the first configuration of the passenger seat 100 can form the part of the sitting surface 101 provided by the passenger seat 100 in the first configuration on which a passenger can actually place his/her buttocks and at least parts of his/her upper leg (thigh), particularly when using the passenger seat 100 in the first configuration in the intended manner. The sitting surface of the second module 300 thus, typically provides, in the first configuration of the passenger seat 100, a freely exposed surface on which a passenger can place his/her buttocks and at least parts of his/her upper leg (thigh), particularly when using the passenger seat 100 in the first configuration in the intended manner. As such, the sitting surface of the second module 300 is arranged above the first module 200 (see particularly the cut-view of Fig. 3), particularly above a support surface of the first module 200, in the first configuration of the passenger seat 100.

As is further apparent from Fig. 1 - 6, the support surface provided by the first module 200 does not form part, particularly no direct part, of the sitting surface 101 provided by the passenger seat 100 in the first configuration as it provides support for the second module 300. The support surface of the first module 200 thus, provides, in the first configuration of the passenger seat 100, a surface on which the second module 300 can be supported or is supported. The support surface of the first module 200 thus, provides, in the first configuration of the passenger seat 100, no freely exposed surface on which a passenger can place a part of his/her body, particularly when using the passenger seat 100 in the first configuration in the intended manner. As such, the support surface of the first module 200 is arranged below the second module 300 (see particularly the cut-view of Fig. 3), particularly below a surface of the second module 300 opposite the sitting surface, in the first configuration of the passenger seat 100.

As is particularly apparent from Fig. 3, the first and second modules 200, 300 are arranged in a vertically stacked arrangement as the second module 300 is arranged above the first module 200. As is apparent from Fig. 7 - 9, in the second configuration of the passenger seat 100, the first and second modules 200, 300 are not arranged in a respective vertically stacked arrangement but in a side-by-side arrangement with respect to or parallel to a reference axis RA which is or coincides with the longitudinal axis LA of the passenger seat 100 in the exemplary embodiment of the Fig.

As is apparent from Fig. 7-9, the first module 200 provides a first part of the lying surface 102 for a passenger and the second module 300 provides a second part of the lying surface 102 for a passenger in the second configuration of the passenger seat 100.

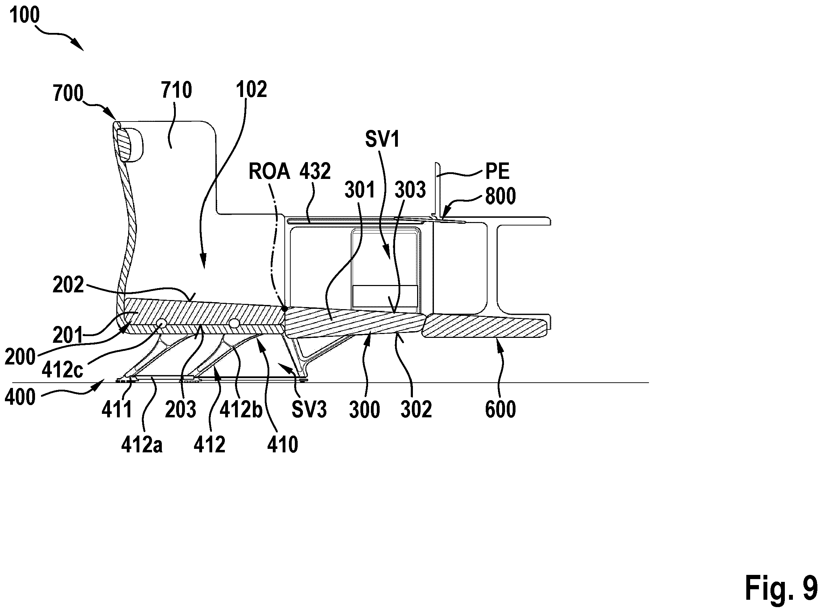

As is apparent from Fig. 7-9, the first module 200 thus, provides a surface, which can be deemed part of the lying surface 102, and thus, generally forms a part, particularly a direct part, of the lying surface 102 provided by the passenger seat 100 in the second configuration. Particularly, the surface provided by the first module 200 in the second configuration of the passenger seat 100 can form the part of the lying surface 102 provided by the passenger seat 100 in the second configuration on which a passenger can actually place at least one of: parts of his/her upper body, parts of his/her buttocks, and at least parts of his/her upper leg (thigh), particularly when using the passenger seat 100 in the second configuration in the intended manner. The surface of the first module 200 thus, provides, in the second configuration of the passenger seat 100, a freely exposed surface on which a passenger can place, when using the lying surface 102 provided by the passenger seat 100 in the intended manner, at least one of: parts of his/her upper body, parts of his/her buttocks and at least parts of his/her upper leg (thigh). As such, the respective surface of the first module 200 is not arranged below the second module 300 but, as will be apparent from further below, arranged in a common plane with a freely exposed surface of the second module 300 (see particularly the cut-view of Fig. 9), wherein the common plane can be coincident or parallel with a plane of the lying surface 102 provided by the passenger seat 100 in the second configuration.

As is further apparent from Fig. 7-9, the second module 300 also provides a surface, which can be deemed part of the lying surface, and thus, generally forms a part, particularly a direct part, of the lying surface 102 provided by the passenger seat 100 in the second configuration. Particularly, the (lying) surface provided by the second module 300 in the second configuration of the passenger seat 100 can form the part of the lying surface provided by the passenger seat 100 in the second configuration on which a passenger can actually place at least one of: parts of his/her buttocks, at least parts of his/her upper leg (thigh), and at least parts of his/her lower leg (calf, foot, etc.), particularly when using the passenger seat 100 in the second configuration in the intended manner. The surface of the second module 300 thus, provides, in the second configuration of the passenger seat 100, a freely exposed surface on which a passenger can place, when using the lying surface 102 provided by the passenger seat 100 in the intended manner, at least one of: parts of his/her buttocks, at least parts of his/her upper leg (thigh), and at least parts of his/her lower leg (calf, foot, etc.). As such, the respective freely exposed surface of the second module 300 is not arranged above the first module 200 but arranged in the aforementioned common plane with the respective freely exposed surface of the first module 200 (see particularly the cut-view of Fig. 9), wherein the common plane can be coincident or parallel with a plane of the lying surface provided by the passenger seat 100 in the second configuration.

As indicated above, in the second configuration of the passenger seat 300, the first and second modules 200, 300 are not arranged in a vertically stacked arrangement as the second module 300 is not arranged above the first module 200 in this configuration. In the second configuration of the passenger seat 100, the first and second modules 200, 300 are rather arranged in a side-by-side arrangement in or parallel to a reference axis RA (see particularly the cut-view of Fig. 9).

The above-specified construction of the passenger seat 100 enables transferring the passenger seat 100 from the first configuration in the second configuration, and vice versa, without the requirement of drive devices including motors, related drive elements, etc., control units, etc. as the arrangement possibilities of the first and second modules 200, 300 relative to each other, i.e. the vertically stacked arrangement of the first and second module 200, 300 in the first configuration of the passenger seat 100 and the side-by-side arrangement of the first and second module 200, 300 in the second configuration of the passenger seat 100, are intuitive to a passenger such that the passenger can manually arrange the first and second modules 200, 300 relative to each other accordingly to implement the first or second configuration of the passenger seat 100 and thus, to prepare the passenger seat 100 for sitting by providing a sitting surface 101 in the first configuration or for lying by providing a lying surface 102 in the second configuration, respectively.

As the construction of the passenger seat 100 enables, e.g. by the passenger or an assistant, manually transferring the passenger seat 100 in its respective first and second configurations without the requirement of actuating drive devices including motors, related drive elements, etc., control units, etc., the weight of the passenger seat 100 can be significantly reduced when compared to conventional passenger seats. The passenger seat 100 thus, has a light constructive design. Also, due to the omission of drive devices including motors, related drive elements, etc., control units, etc., additional stowage areas can be created, e.g. under the first and second modules 200, 300.

As is apparent from the Fig., each of the first module 200 and the second module 300 can comprise a first surface 202, 302 and, opposite to the first surface 202, 302, a second surface 203, 303. Given this configuration of each of the first and the second modules 200, 300, the following applies with respect to the first and second configuration of the passenger seat 100 in the exemplary embodiment:
In the first configuration of the passenger seat 100, the first surface 202 of the first module 200 can provide the support surface for the second module 300 such that the first surface 202 of the first module 200 supports the second surface 303 of the second module 300. The first surface 202 of the first module 200 is thus, directly opposite the second surface 303 of the second module 300 (see again Fig. 3). The first surface 302 of the second module 300 can thus, provide the sitting surface 101 for a passenger.

As is apparent from the Fig., the first surface 202 of the first module 200 can be oriented upward, i. e. facing away from an underground, e.g. the floor of a passenger cabin of a vehicle which is provided with the passenger seat 100, on which the passenger seat 100 is installed, in the first configuration of the passenger seat 100. As such, the first surface 202 of the first module 200 can comprise the support surface on which the second module 300 is supported in the first configuration of the passenger seat 100. In the first configuration of the passenger seat 100, the second surface 203 of the first module 200 can be oriented downward, i. e. facing towards an underground, e.g. the floor of a passenger cabin of a vehicle which is provided with the passenger seat 100, on which the passenger seat 100 is installed. As such, the second surface 203 of the first module 200 cannot comprise a surface on which the second module 300 can be supported in the first configuration of the passenger seat 100. Yet, the second surface 203 of the first module 200 can be arranged to delimit, particularly together with a respective underground, a stowage volume SV beneath at least the first module 200 in the first configuration of the passenger seat 100 (see again Fig. 3 but also Fig. 9). The first surface 302 of the second module 300 can be oriented upward, i. e. facing away from an underground, e.g. the floor of a passenger cabin of a vehicle which is provided with the passenger seat 100, on which the passenger seat 100 is installed. As such, the first surface 302 of the second module 300 can comprise a freely exposed surface on which a passenger can sit in the first configuration of the passenger seat 100. In the first configuration of the passenger seat 100, the second surface 303 of the second module 300 can be oriented downward, i. e. facing towards an underground, e.g. the floor of a passenger cabin of a vehicle which is provided with the passenger seat 100, on which the passenger seat 100 is installed. As such, the second surface 303 of the second module 300 cannot comprise a freely exposed surface on which a passenger can sit in the first configuration of the passenger seat 100.

In the second configuration of the passenger seat 100, the first surface 202 of the first module 200 can provide the or a first part of the lying surface 102 for a passenger and the first or the second surface 302, 303 of the second module 300 can provide the second part of the lying surface 102 for a passenger.

As is apparent from the Fig, in the second configuration of the passenger seat 100, the first surface 202 of the first module 200 can be oriented upward, i. e. facing away from an underground, e.g. the floor of a passenger cabin of a vehicle which is provided with the passenger seat 100, on which the passenger seat is installed 100, in the second configuration of the passenger seat 100. As such, the first surface 202 of the first module 200 can comprise a freely exposed surface, namely the first part of the lying surface 102, on which a passenger can lie in the second configuration of the passenger seat 100. The second surface 203 of the first module 200 can still be oriented downward, i. e. facing towards an underground, e.g. the floor of a passenger cabin of a vehicle which is provided with the passenger seat 100, on which the passenger seat 100 is installed. Hence, the first surface 202 of the first module 200 provides a surface on which the second module 300 can be supported in the first configuration of the passenger seat 100 and a surface, namely the first part of the lying surface 102, on which a passenger can lie in the second configuration of the passenger seat 100. As such, the first surface 202 of the first module 200 cannot comprise a freely exposed surface on which a passenger can sit in the first configuration of the passenger seat 100 (and no surface on which a passenger can lie in the second configuration of the passenger seat 100 either). Yet, the second surface 203 of the first module 200 can still be arranged to delimit, particularly together with a respective underground, a stowage volume supply voltage beneath at least the first module 200 in the first and second configuration of the passenger seat 100.

With respect to the second module 300, two options are particularly conceivable in connection with the second configuration of the passenger seat 100; the second module 300 can therefore, also be deemed or denoted a "multi-function module":
In a first exemplary option (not explicitly shown in the Fig.), the first surface 302 of the second module 300 can be oriented upward in the second configuration of the passenger seat 100, i. e. facing away from an underground, e.g. the floor of a passenger cabin of a vehicle which is provided with the passenger seat 100, on which the passenger seat 100 is installed. As such, the first surface 302 of the second module 300 can comprise a freely exposed surface, namely the second part of the lying surface 102, on which a passenger can lie in the second configuration of the passenger seat 100. The second surface 303 of the second module 300 can be oriented downward, i. e. facing towards an underground, e.g. the floor of a passenger cabin of a vehicle which is provided with the passenger seat 100, on which the passenger seat 100 is installed in the first exemplary option. As such, the second surface 303 of the second module 300 cannot comprise a freely exposed surface on which a passenger can lie in the second configuration of the passenger seat 100 in the first exemplary option. Hence, the first surface 302 of the second module 300 can provide both a surface on which a passenger can sit in the first configuration of the passenger seat 100 and a surface, namely the second part of the lying surface 102, on which a passenger can lie in the second configuration of the passenger seat 100.

In a second exemplary option (shown in the Fig.), the second surface 303 of the second module 300 can be oriented upward in the second configuration of the passenger seat 100, i. e. facing away from an underground, e.g. the floor of a passenger cabin of a vehicle which is provided with the passenger seat 100, on which the passenger seat 100 is installed. As such, the second surface 303 of the second module 300 can comprise a freely exposed surface, namely the second part of the lying surface 102, on which a passenger can lie in the second configuration of the passenger seat 100. As such, the second surface 303 of the second module 300 can provide, in the second configuration of the passenger seat 100, the second part of the lying surface 102 for a passenger in this exemplary option. The first surface 302 of the second module 300 can be oriented downward, i. e. facing towards an underground, e.g. the floor of a passenger cabin of a vehicle which is provided with the passenger seat 100, on which the passenger seat 100 is installed in the second exemplary option. As such, the first surface 302 of the second module 300 cannot comprise a freely exposed surface on which a passenger can lie in the second configuration of the passenger seat 100 in the second exemplary option. Hence, the first surface 302 of the second module 300 provides a surface on which a passenger can sit in the first configuration of the passenger seat 100 and the second surface 303 of the second module 300 provides a surface, namely the second part of the lying surface 102, on which a passenger can lie in the second configuration of the passenger seat 100.

As is apparent from a comparison of Fig. 1 - 6 and Fig. 7-9, the lying level plane of the lying surface 102 provided by the passenger seat 100 in the second configuration can be below the sitting level plane of the sitting surface 101 provided by the passenger seat 100 in the first configuration which can also create more lying space for a passenger in the second configuration and thus, increase comfort.

It is further apparent from the Fig., that the second module 300 can be transferrable, by moving same in at least one degree of freedom of motion, in a first state or a first orientation (see Fig. 1 - 6), respectively in which its first surface 302 is freely exposed such that it provides the or at least part of the sitting surface 101 for a passenger in the first configuration of the passenger seat 100, and in a second state or second orientation (see Fig. 7 - 9), respectively in which its second surface 303 is freely exposed such that it provides the second part of the lying surface 102 for a passenger in the second configuration of the passenger seat 100. Hence, the second module 300 can generally be moveable or moveably supported to transfer it, by moving it in at least one degree of freedom of motion, in a respective first state or first orientation in which it provides the or at least part of the or a sitting surface 101 for a passenger in the first configuration of the passenger seat 100, and in a second state or second orientation, respectively in which its second surface 303 is freely exposed such that it provides the second part of the lying surface 102 for a passenger in the second configuration of the passenger seat 100.

The at least one degree of freedom of motion can be or comprise a rotational motion, particularly a pivot motion (as indicated by the double-arrow P1 in Fig. 3), about a rotation axis ROA, particularly about a pivot axis. The rotation axis ROA, particularly the pivot axis, can be a horizontal axis transverse to the longitudinal axis LA of the passenger seat 100, for example. Hence, transferring the second module 300 from its first state or first orientation into its second state or second orientation, or vice versa, can be effected by a rotational motion, particularly a pivot motion, of the second module 300. A respective rotational or pivot motion enables that the first surface 302 of the second module 300 is freely exposed in the first configuration of the passenger seat 100 (see e.g. Fig. 2, 3) and that the second surface 303 of the second module 300 is freely exposed in the second configuration of the passenger seat 100 (see e.g. Fig. 7). As such, a respective rotational or pivot motion can substantially comprise flipping the second module 300 such that either of its surfaces 302, 303 is substantially flipped when the second module 300 is transferred from its first state or orientation in its second state or orientation (and vice versa). As is apparent from the Fig., the first surface 302 of the second module 300 can be oriented upward in the first state or orientation and downward in the second state or orientation and the second surface 303 of the second module 300 can be oriented downward in the first state or orientation and upward in the second state or orientation. Yet, the level of the freely exposed surface provided by the first surface 303 in the first state or orientation, which is, as is apparent from the Fig., correlated with the first configuration of the passenger seat 100, is typically higher than the level of the freely exposed surface provided by the second surface 303 in the second state or orientation, which is, as is apparent from the Fig., correlated with the second configuration of the passenger seat 100.

As is further apparent from the Fig., the second module 300 can be, directly or indirectly, moveably connected to the first module 200, particularly to move it, e.g. by rotating or pivoting, in the respective first and/or second state or orientation. A respective connection can generally, comprise at least one of: a force-fit connection, e.g. by bolting, sewing, stitching, a form-fit connection, e.g. by snapping, hook and loops, etc. and an adherence-fit connection, e.g. by gluing or welding. Particularly, the moveable connection can comprise the at least one degree of freedom of motion in which the second module 300 can be transferred in its respective first and second state (as specified above). More particularly, the first module 200 can be provided with or comprise one or more one- or multi-dimensional connection sites 204 (only schematically indicated in some of the Fig.) which enable pivotably connecting the second module 300 to the first module 200. Hence, the second module 300 can be provided with one or more corresponding one- or multi-dimensional connection sites 304 (only schematically indicated in some of the Fig.). In such a manner, the second module 300 can be pivoted relative to the first module 200 via the interaction of respective one or more one- or multi-dimensional connection sites 204, 304 of the first and second module 200, 300. As such, respective one or more connection one- or multi-dimensional connection sites 204, 304 of the first and/or second module 200, 300 can also define the rotation axis ROA about which the second module 300 can be pivoted relative to the first module 200 (which is typically, static). As an example, respective one- or multi-dimensional connection sites 204, 304 of the first and/or second module 200, 300 can be provided as or form part of one or more hinge devices, for instance. Respective hinge devices can be built by or comprise mechanical hinge elements, for example. Respective hinge devices can also be built by or comprise hinge elements formed by sewing or stitching, e.g. via a sewing or stitching seam, as the connection between the first module 200 and the second module 300 can be realized by sewing or stitching, respectively. As indicated in the Fig., respective one or more one- or multi-dimensional connection sites 204 of the first module 200 can be provided with a free end of the first module 200 which faces, in the second configuration of the passenger seat 100, towards a free end of the lying surface 102 of the passenger seat 100 at which a passenger would place his feet when lying on the passenger seat 100 in the intended manner. As an example, respective one or more one- or multi-dimensional connection sites 304 of the second module 300 can be provided with a free end of the second module 300 which faces, in the first configuration of the passenger seat 100, towards the free end of the lying surface of the passenger seat 100 at which the passenger would place his feet when lying on the passenger seat 100 in the intended manner.

Yet, it is also conceivable that the second module 300 can be, directly or indirectly, moveably connected to a structural element of the passenger seat 100 (which is or can be different from the first module 200), wherein the moveable connection can comprise the at least one degree of freedom of motion, particularly the or a rotational degree of motion, in which the at least one second module 300 can be transferred in its respective first and second state or orientation. More particularly, the respective structural element of the passenger seat 100, which can be an element of a frame structure 400 of the passenger seat 100, for instance, can be provided with or comprise one or more one- or multi-dimensional connection sites which enable pivotably connecting the second module 300 to the structural element. Hence, the structural element can be provided with one or more corresponding one- or multi-dimensional connection sites 400. In such a manner, the second module 300 can be rotated or pivoted relative to the structural element via the interaction of respective one or more one- or multi-dimensional connection sites 404, 304 of the structural element and the second module 300. As such, respective one or more connection one- or multi-dimensional connection sites 404, 304 of the structural element and/or the second module 300 can also define a pivot axis about which the second module can be pivoted relative to the structural element (which is typically, static). As an example, respective one- or multi-dimensional connection sites 404, 304 of the structural element and/or the second module 300 can be provided as or form part of one or more hinge devices, for instance. Respective hinge devices can be built by or comprise mechanical hinge elements, for example. Respective hinge devices can also be built by or comprise hinge elements formed by sewing or stitching, e.g. via a sewing or stitching seam, as the connection between the structural element 400 and the second module 300 can be realized by sewing or stitching, respectively. As an example, respective one or more one- or multi-dimensional connection sites 404, 304 of the structural element can be provided with a free end of the structural element which faces, in the second configuration of the passenger seat 100, towards a free end of the lying surface 102 of the passenger seat 100 at which a passenger would place his feet when lying on the passenger seat 100 in the intended manner. As an example, respective one or more one- or multi-dimensional connection sites 304 of the second module 300 can be provided with a free end of the second module 300 which faces, in the first configuration of the passenger seat 100, towards the free end of the lying surface 102 of the passenger seat 100 at which the passenger would place his feet when lying on the passenger seat 100 in the intended manner.

At least the second module 300 can comprise at least one gripping portion 405 (only schematically indicated in some of the Fig.) which can be gripped by a passenger for transferring the second module 300 from the first state or orientation to the second state or orientation, or vice versa. A respective gripping portion 405 can be or comprise any portion of the second module 300 which can be gripped, e.g. by a passenger, for transferring the second module 300, e.g. via a respective rotational or pivot motion as specified above, from the first state or orientation to the second state or orientation, or vice versa. Non-limiting examples of a respective gripping portion 405 can comprise one or more gripping elements, such as e.g. a flap, a handle, a lever, etc. attached to the base body 301 of the second module 300 and/or one or more gripping elements, such as e.g. edges, projections, recesses, etc. provided with the base body 301 of the second module 300, e.g. by providing the base body 301 of the second module 300 with a specific shape, e.g. comprising edges, projections, recesses, etc., which form(s) one or more gripping elements. As such, respective gripping elements can be integrally formed with the base body 301 of the second module 300.

As is further apparent from the Fig., the passenger seat 100 can comprise one or more further modules 500, 600 in addition to the first and second module 200, 300 as will be more apparent from below:
As shown in the Fig., the passenger seat 100 can further comprise a third module 500 which is configured to provide a backrest for a passenger, particularly a backrest with lumbar support, in the first configuration of the passenger seat 100, and/or which provides a pillow for a passenger in the second configuration of the passenger seat 100. The third module 500 can be a module which is not statically attached to the first and/or second module 200, 300. This does not exclude that the third module 500 can be, e.g. via hook and loop connectors provided with at least one surface of the third module 500, temporarily attached to the first and/or second module 200, 300. More particularly, the third module 500 can be arbitrarily positioned on a surface of the first and/or the second module 200, 300 which makes it possible to use the third module 500, in the first configuration of the passenger seat 100, as a respective backrest, and, in the second configuration of the passenger seat 100, as a pillow. As such, also the third module 500 can be provided with a three-dimensional contour, particularly an ergonomic contour, provided with a respective first and/or second surface thereof to improve the comfort in the first or second configuration of the passenger seat 100. Also, the third module 500 can be built by or comprise one or more cushion elements, such as e.g. cushioning layers, made from a cellular material or material structure, such as e.g. a foam or foam structure, for instance.

As shown in the Fig., the passenger seat 100 can further comprise a fourth module 600 which is configured to provide a footrest for a passenger at least in the second configuration of the passenger seat 100. The fourth module 600 can thus, be deemed an ottoman module. The fourth module 600 can be a module which is statically attached to at least part of a frame structure 400 of the passenger seat 100. The fourth module 600 can be positioned substantially lateral to the first and/or second module 200, 300. With respect to an arrangement of multiple passenger seats 100, the fourth module 600 of a first passenger seat 100 can be positioned adjacent to a free end of the second module 300 of a second passenger seat 100, wherein the free end of the second module 300 faces, in the second configuration of the second passenger seat 100, towards the free end of the lying surface 102 of the second passenger seat 100 at which the passenger would place his feet when lying on the passenger seat 100 in the intended manner (this embodiment is indicated in the Fig.) As such, the fourth module 600 can even provide the or a surface on which a passenger would place his feet at least in the second configuration of the passenger seat 100 when lying on the passenger seat 100 in the intended manner. However, the passenger can generally also place his feet on the fourth module 600 in the first configuration of the passenger seat 100. Also the fourth module 600 can be provided with a three-dimensional contour, particularly an ergonomic contour, provided with at least one surface thereof to improve the comfort in the first or second configuration of the passenger seat 100. Also, the fourth module 600 can be built by or comprise one or more cushion elements, such as e.g. cushioning layers, made from a cellular material or material structure, such as e.g. a foam or foam structure, for instance.

As is particularly apparent from Fig. 1 - 6, a gap space GS can be created between the fourth module 600 and the second module 300, particularly between opposing ends or sides of the fourth module 600 and the second module 300, in the first configuration of the passenger seat 100, i.e. typically, when the second module 300 is in the first state or orientation, which gap space GS can be closed in the second configuration of the passenger seat 100, i.e. typically, when the second module 300 is in the second state or orientation or when the second module 300 is being transferred to the second state or orientation, respectively. The gap space GS can facilitate easy entry and exit of the passenger seat 100 in the first configuration and enable easy access to possible stowage areas provided by the passenger seat 100.

Generally, also the first surface 202, 302 of at least one of the first module 200 and/or the second module 300 can be provided with a three-dimensional contour, particularly an ergonomic contour, for supporting a body part of a passenger, e.g. a part of the buttocks of a passenger who is sitting on the passenger seat 100 in the first configuration or a part of the upper body of a passenger who is lying on the passenger seat 100 in the second configuration. With respect to the second module 300, particularly the surface which is freely exposed in the first configuration of the passenger seat 100, i.e. the first surface 302 of the second module 300 in the embodiments shown in the Fig., can be provided with a respective three-dimensional contour which improves the comfort of sitting on the passenger seat 100 in the first configuration.

Additionally or alternatively, the second surface 203, 303 of at least one of the first module 200 and/or the second module 300 can be provided with a three-dimensional contour, particularly an ergonomic contour, for supporting a body part of a passenger, particularly a part of the upper body of a passenger, lying on the respective second surface 203, 303. With respect to the first module 200, particularly the surface which is freely exposed in the second configuration of the passenger seat 100, which is typically the first surface, can be provided with a respective three-dimensional contour which improves the comfort of lying on the passenger seat 100 in the second configuration. Likewise, with respect to the second module 300, particularly the surface which is freely exposed in the second configuration of the passenger seat 100, which can be either the first or the second surface 302, 303, can be provided with a respective three-dimensional contour which improves the comfort of lying on the passenger seat 100 in the second configuration.

As is apparent from Fig. 7 - 9, at least the first module 200, the second module 300, and the fourth module 600 can be configured to provide a substantially plane, particularly substantially continuous, lying surface 102 for a passenger in the second configuration of the passenger seat 100. Particularly, the substantially plane lying surface 102 can be realized by a side-by-side arrangement of the first module 200, the second module 300, and the fourth module 600 in or parallel to a reference axis RA, particularly the longitudinal axis LA of the passenger seat 100. Particularly, the first module 200, the second module 300, and the fourth module 600 can be arranged in a common plane which extends in or parallel to a reference axis RA, particularly the longitudinal axis LA of the passenger seat 100. The substantially plane lying surface 102 can therefore, extend parallel to a horizontal (reference) plane which can be the floor of a vehicle, particularly an aircraft, in which the passenger seat 100 is installed.

The substantially plane lying surface 102 can have a longitudinal extension of at least 160 cm, particularly at least 170 cm, more particularly at least 180 cm, more particularly at least 190 cm. As such, the longitudinal extension of the lying surface 102 enables that a passenger can have sufficient least that an adult person can find a comfortable lying position in the second configuration of the passenger seat 100. The width of the substantially plane lying surface 102 can vary along its longitudinal extension. Yet, the minimum width of the substantially plane lying surface 102 can be at least 30 cm. Typically, the fourth module 600 can provide a portion of the substantially plane lying surface 102 which has the smallest width.

As is apparent from the Fig., the passenger seat 100 comprises a housing structure 700 which at least partially houses at least the first module 200 and the second module 300 at least in the first configuration of the passenger seat 100. The housing structure 700 can comprise one or more walls 701 extending in a substantially vertical direction, particularly to create a privacy space for a passenger of the passenger seat 100. In the first configuration of the passenger seat 100, the vertical extension of the housing structure 700 can be at least 40 cm, particularly at least 50 cm, more particularly at least 60 cm, more particularly at least 70 cm, more particularly at least 80 cm, with respect to the freely exposed surface of the second module 300 such that most parts of at least the upper body of a passenger are surrounded by the housing structure 700. Particularly, the housing structure 700 can have a U-shaped base shape, particularly in a cross-sectional view, such that a passenger is at least partially nested within the privacy space created by the housing structure 700 in at least two spatial directions.

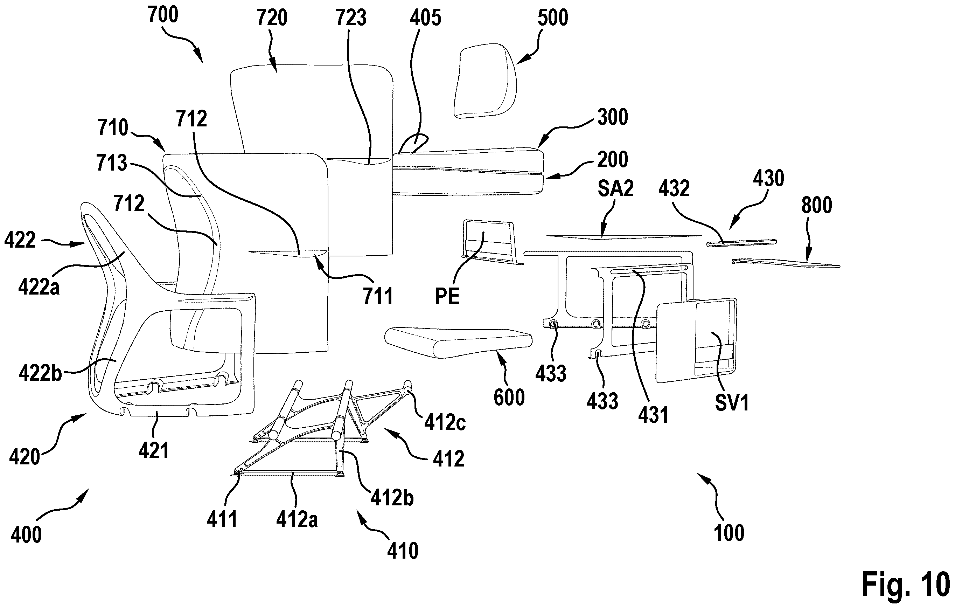

As is particularly, apparent from the exploded view of the passenger seat 100 of Fig. 10, the housing structure 700 can comprise a shell element 710 and a backrest element 720 which is at least partially surrounded by the shell element 710. The housing structure 700 can thus, comprise a two-part design which enables providing the housing structure 700 with additional functionalities. Particularly, the shell element 10 can provide a connection functionality via which the housing structure 700 can be connected with the frame structure 400 of the passenger seat 100 and the backrest element 720 can provide a backrest functionality via which the housing structure 700 can provide one or more armrest and/or backrest portions. As such, the backrest element 720 can comprise at least one of: one or more backrest surfaces 722 for a passenger of the passenger seat 100 and/or one or more armrest surfaces 723 for a passenger of the passenger seat 100, particularly provided by projections, depressions, recesses, etc. within a base body of the backrest element 720. Respective backrest and/or armrest surfaces 722, 723 can be integral portions of at least the backrest element 720 which can be created, e.g. by molding the backrest element 720.

Notably, the shell element 710 can comprise the same or a similar base shape as the backrest element 720. The shell element 710 can therefore, provide one or more support areas 711 for at least partially supporting the backrest element 720. Particularly, due to the possibility of corresponding base shapes of the shell element 710 and the backrest element 720, the shell element 710 can provide mechanical support for the backrest element 720, e.g. one or more respective projections provided with the shell element 710 can engage with corresponding recesses of the backrest element 720, or vice versa.

Thus, the shell element 710 can comprise one or more first support portions 712, particularly provided as projections or recesses, for supporting the backrest element 720. Particularly, respective first support portions 712 can provide interfaces for supporting the backrest element 720 on the shell element 710. As indicated above, the shell element 710 can provide mechanical support for the backrest element 720, e.g. respective projections provided with the shell element 710 can engage with corresponding recesses of the backrest element 720, or vice versa. The shape of respective first support portions 712 of the shell element 710 can particularly, correspond to the shape of backrest and/or armrest surfaces 722, 723 of the backrest element 720 such that respective first support portions 712 of the shell element 710 can provide support for respective backrest and/or armrest surfaces 722, 723 of the backrest element 720.

The shell element 710 can further comprise one or more second support portions 712, particularly provided as projections or recesses, for supporting the shell element 710 on the frame structure 400 of the passenger seat 400. As such, respective second support portions 712 can provide interfaces for supporting the shell element 710 and the housing structure 700, respectively on the frame structure 400 of the passenger seat 100. Respective interfaces cannot only provide support but can also enable a stable mechanical connection of the housing structure 700 with the frame structure 400.

The backrest element 720 can have a low wall thickness, e.g. of less than 1.5 cm, particularly less than 1 cm, which also reduces weight. As such, the backrest element 720 can have a very low weight contributing to the lightweight construction of the passenger seat 100. Further, the backrest element 720 can have high inherent flexibility and/or low inherent stiffness which requires direct or indirect additional mechanical support of the backrest element 720 which can be provided, as will be apparent from further below, by the frame structure 400 of the passenger seat 100.

Also the shell element 710 can have a low wall thickness, e.g. of less than 1.5 cm, particularly less than 1 cm, which also reduces weight. As such, the shell element 710 can have a very low weight contributing to the lightweight construction of the passenger seat 100. Further, the shell element 710 can have high inherent flexibility and/or low inherent stiffness which requires direct or indirect additional mechanical support of the shell element 710 which can also be provided, as will be apparent from further below, by the frame structure 400 of the passenger seat 100.

At least the backrest element 720 can be made of or comprise a soft material or soft material structure, such as e.g. fabric, leather, soft polymer, such as e.g. thermoplastic elastomers, etc., particularly in areas forming respective backrest and/or armrest surfaces. Additionally or alternatively, respective backrest and/or armrest surfaces 722, 723 can be provided with one or more cushion elements particularly with a removable dress cover.

The shell element 710 can be at least partially, particularly completely, made of or comprise a flexible plastic element, particularly made from a thermoformed plastic sheet material.

As indicated above, the passenger seat 100 further comprises a frame structure 400 for supporting at least the first and second modules 200, 300. Notably, the frame structure 400 can also support the housing structure 700. The frame structure 400 is typically, made of a material or material structure having a low inherent flexibility and/or high inherent stiffness which provides structural support and enables that the frame structure 400 can withstand forces and/or momentums, e.g. applied by the mass of a passenger of the passenger seat 100. As an example, the frame structure 400 can be at least partially, particularly completely, made from metal, particularly light metal, more particularly aluminum or an aluminum alloy, or a metal or light metal structure, respectively. This provides both a contribution to the lightweight construction of the passenger seat 100 and the required structural properties of the frame structure 400. Additionally or alternatively to metals, also other material groups, such as e.g. composite materials, particularly fiber-reinforced composite materials, are conceivable for forming the frame structure 400.

Even though not explicitly shown in the Fig., the frame structure 400 can also be provided with or comprise one or more attachment interfaces for attaching a restraint device, such as e.g. a fastening belt, thereto. Respective attachment interfaces can particularly, be arranged at positions of the frame structure 400 which enable the implementation of two-point- or three-point fastening belt. As such, two attachment interfaces can be arranged substantially in a common (substantially horizontal) plane, and an optional third attachment interface can be arranged in a position above the common (substantially horizontal) plane.

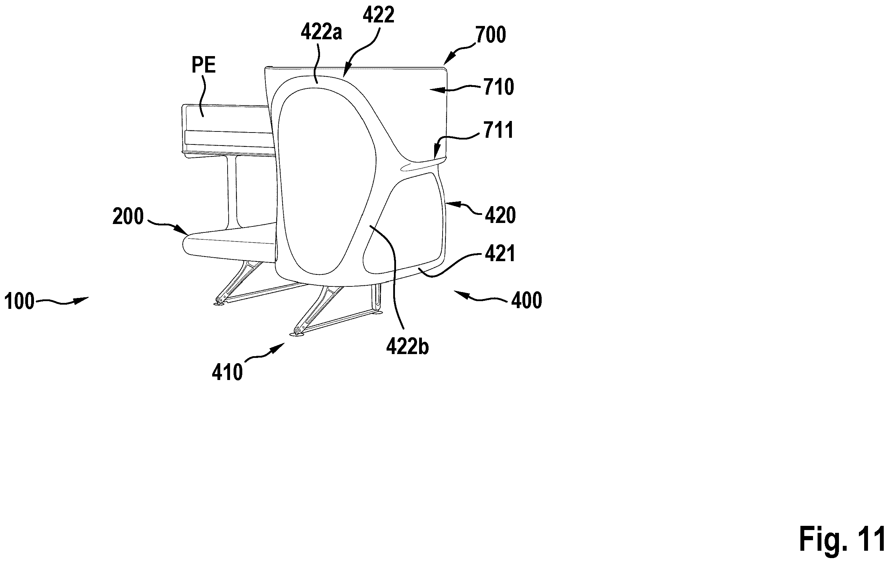

As is particularly apparent from Fig. 10 and Fig. 11, the frame structure 400 can comprise a first frame structure device 410 which comprises at least one first connection interface 411 for connecting the first frame structure device 410 to a vehicle, particularly an aircraft, and/or at least one second connection interface 412 for directly or indirectly connecting the first frame structure device 410 to the first and/or second module 200, 300. Particularly, the first frame structure device 410 can be configured to connect (and mechanically attach) the frame structure 400 to a structural element of a vehicle, e.g. the ground of a part of a vehicle, via the at least one first connection interface 411. The at least one first connection interface 411 can thus, comprise one or more connection elements, such as e.g. anchoring elements, enabling a stable mechanical connection with the structural element of a vehicle. A respective structural element of a vehicle can be or comprise connection interfaces, such as e.g. rails provided with a ground of a vehicle. For aircraft applications, respective connection interfaces can particularly, be or comprise connection rails provided for installing a passenger seat on the floor of a passenger cabin of the aircraft.

As is particularly apparent from Fig. 10 and 11, the first frame structure device 410 can comprise one or more, particularly web-like, frame structure device elements 412 which can be interconnected at defined connection points. Particularly, the first frame structure device 410 can comprise first frame structure device elements 412a which can be built as or comprise legs and which are provided with or comprise one or more connection elements, such as e.g. anchoring elements, which are configured to provide a stable mechanical connection with the structural element of a vehicle as specified above. Further, the first frame structure device 410 can comprise one or more second frame structure device elements 412b which can be built as or comprise arms which are provided with or comprise one or more connection elements, such as e.g. anchoring elements, which are configured to provide a stable mechanical connection with a second frame structure device 420 of the frame structure 400. Particularly, the first frame structure device 410 can comprise one or more third frame structure device elements 412c which can be built as or comprise arms which are provided with or comprise one or more connection elements, such as e.g. anchoring elements, which are configured to provide a stable mechanical connection with a third frame structure device 430 of the frame structure 400.

The first frame structure device 410 can generally comprise an open frame design which such that the first frame structure device 410 can also define, particularly together with the first module 200, a stowage area below the actual sitting surface of the passenger seat 100 in the first configuration. This is not possible with conventional business-class seats as these comprise a closed shell design which does not allow for stowing items below the sitting surface.

As is particularly apparent from Fig. 10 and Fig. 11, the frame structure 400 can comprise a second frame structure device 420 which comprises at least one first connection interface 421 for connecting the second frame structure device 420 to the first frame device 410, and/or at least one second connection interface 422 for connecting the second frame structure device 420 to the housing structure 700. Particularly, the second frame structure device 420 can be configured to connect (and mechanically attach) the second frame structure device 420 to the first frame structure device 410 via the at least one first connection interface 421. The at least one first connection interface 421 can comprise one or more connection elements, such as e.g. force-fit- and/or form-fit elements, enabling a stable mechanical connection of the second frame structure device 420 with the first frame structure device 410. Further, the second frame structure device 420 can also be configured to connect (and mechanically) attach the second frame structure device 420 to the housing structure 700, particularly the shell element 710 of the housing structure 700, via the at least one second connection interface 422. The at least one second connection interface 422 can comprise one or more connection elements, such as e.g. force-fit and/or form-fit elements, enabling a stable mechanical connection of the second frame structure device 420 with the housing structure 700. As an example, the at least one second connection interface 422 can at least comprise one or more engagement elements, such as e.g. projections, e.g. extending in one or more directions, which engage into corresponding engagement elements 713, e.g. extending in or more corresponding directions, such as e.g. depressions, recesses, etc., provided with the housing structure 700, particularly the shell element 710 of the housing structure 700. Respective engagement elements provided with the second frame structure device and the housing structure 700, particularly the shell element 710 of the housing structure 700, can extend, e.g. in the shape of line-shaped contours, e.g. straight and/or curved, in one or more spatial planes and/or in one or more spatial directions. Particularly, a multi-dimensional network of corresponding engagement elements is conceivable which provides multiple connection points and thus, results in a highly stable multi-dimensional connection between the second frame structure device 420 and the housing structure 700.

Generally, the second frame structure device 420 can comprise one or more first engagement elements 422a providing, via engagement with corresponding engagement elements 713 provided with the housing structure 700, particularly the shell element 710 of the housing structure 700, one or more first engagement sites or interfaces for engaging with and thus, supporting the housing structure 700, particularly the shell element 710 of the housing structure 700, in a first spatial direction, particularly comprising a horizontal spatial direction, and one or more second engagement elements 422b providing, via engagement with corresponding engagement elements 713 provided with the housing structure 700, particularly the shell element 710 of the housing structure 700, one or more second support sites or interfaces for engaging with and thus, supporting the housing structure 700, particularly the shell element 710 of the housing structure 700, in a second spatial direction, particularly comprising a vertical spatial direction.

As is apparent from above, the connection between the second frame structure device 420 and the housing structure 700, particularly the shell element 710 of the housing structure 700, can particularly, comprise a form fit-connection due to the interaction of respective engagement elements 422a, 422b provided with the second frame structure device 420 and corresponding engagement elements provided with the housing structure 700, particularly the shell element 710 of the housing structure 700, which are configured engage with each other thereby, creating the above-mentioned multiple connection points and the multi-dimensional connection, respectively.

The second frame structure device 420 can comprise one or more, particularly web-like, frame structure device elements which can be interconnected at defined connection points. The second frame structure device 420 can thus, generally comprise an open frame design which can enable that the second frame structure device 420 can also define a stowage area behind the actual sitting surface of the passenger seat 100 in the first configuration. This is not possible with conventional business-class seats as these comprise a closed shell design.

Fig. 10 and Fig. 11 particularly show that the second frame structure device 420 can comprise a design or shape of a frame of a chair (chair frame) which comprises one or more segments extending in different spatial directions and being connected at one or more connection nodes. One, more or all of the segments can form or be provided with respective engagement elements 422a, 422b configured to engage with corresponding engagement elements 713 provided with the housing structure 700, particularly the shell element 710 of the housing structure 700. The design or shape of the second frame structure device 420 can thus, be lightweight while it still provides sufficient structural stability for the above-explained connecting and supporting functions.

The passenger seat 100 can further comprise a third frame structure device 430 which can comprise one or more supporting elements 431 providing one or more support sites or interfaces for supporting a functional device 800, particularly a table device including at least one table or stowing surface 801, wherein the functional device 800 can be transferred, e.g. by moving same in at least one degree of freedom of motion, into at least two different configurations. Each of the at least two configurations can refer to a specific orientation and/or position of the functional device 800.

At least one of the at least two different configurations can be a configuration in which a passenger can use the functional device 800 when sitting in the first configuration of the passenger seat 100 (see Fig. 1). As such, at least one configuration can comprise a first orientation and/or position of the functional device 800 close to a body of the passenger when sitting in the first configuration of the passenger seat 100; this first orientation and/or position can enable that the passenger can use the functional device 800 e.g. as a support table e.g. for a laptop, a plate, etc. In other words, in the first orientation and/or position, the functional device 800 can allow that a passenger puts items on the functional device 800 and e.g. works, eats, drinks, etc. using the items on the functional device 800 while sitting. As shown in Fig. 1, the functional device 800 can be arranged at least partially above the second module 300 in a respective first orientation and/or position.

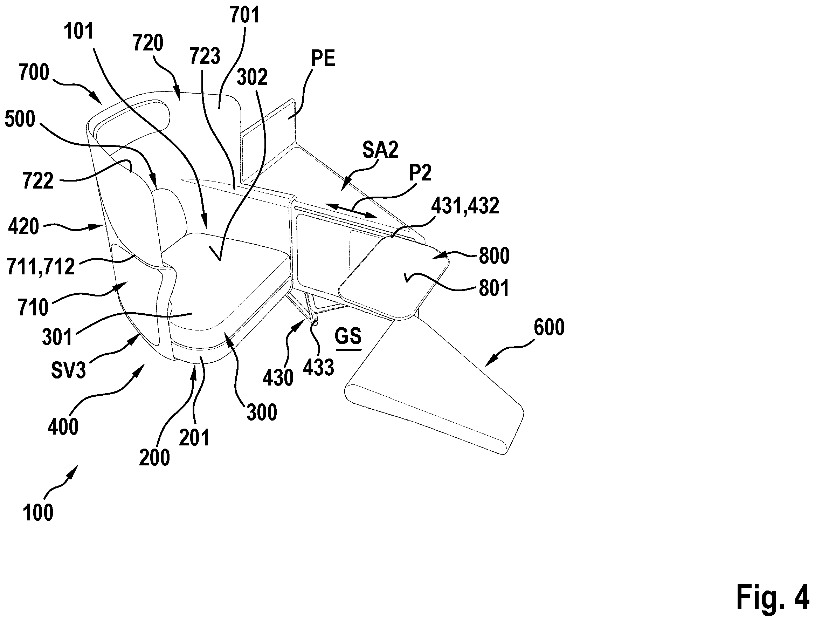

At least one other of the at least two different configurations can be a configuration in which a passenger can use the functional device 800 when lying in the second configuration of the passenger seat 100 (see Fig. 4). As such, at least one configuration of the functional device 800 can comprise a second orientation and/or position of the functional device 800 close to a body of the passenger when lying in the second configuration of the passenger seat 100; this second orientation and/or position can enable that the passenger can use the functional device 800 as a stowage surface e.g. for stowing items, belongings, etc. In other words, in the second orientation and/or position, the functional device 800 can enable the passenger to stow items on a table or stowing surface 801 of the functional device 800. The table or stowing surface 801 of the functional device 800 in the second orientation and/or position can enable that the passenger can, while lying on the lying surface 102, (still) use an item, such as e.g. an electronic device, such as e.g. a smartphone, laptop, tablet, etc., e.g. for consuming media, e.g. watching media content output via a respective electronic device. As a concrete, yet non-limiting example, the functional device 800 can be at least partially arranged above the respective fourth module 600 in a respective second orientation and/or position.

Changes of the orientation and/or position of the functional device 800 for transferring it into respective configurations can be implemented by transferring the functional device 800 in different orientations and/or positions relative to the third frame structure device 430, for example. The third frame structure device 430 can thus, comprise one or more interfaces 432 which can co-act with corresponding interfaces provided with the functional device 800. Respective corresponding interfaces 432 can comprise one or more form-fit elements, such as e.g. plug- and/or corresponding socket-elements, which enable attaching the functional device 800 to the third frame structure device 430 at different orientations and/or positions.

Additionally or alternatively, changes of the orientation and/or position of the functional device 800 for transferring it into respective configurations can be implemented by moving the functional device 800 in at least one degree of freedom of motion to transfer the functional device 800 in different orientations and/or positions relative to the third frame structure device 430. A respective degree of freedom of motion can be or comprise a translational degree of freedom of motion along a translation axis, e.g. enabling sliding the functional device 800 along a translation axis (as indicated by arrow P2 in Fig. 1), and/or a rotational degree of freedom of motion about a rotation axis particularly a pivoting degree of freedom of motion about a pivot axis, e.g. enabling pivoting the functional device 800 about a pivot axis. A respective translation axis or sliding axis can extend parallel to the longitudinal axis LA of the passenger seat 100, for example. A respective rotation or pivot axis can extend transverse to the longitudinal axis L1 of the passenger seat 100, for example. Each of a respective translation axis and/or a respective rotation or pivot axis can be defined by the third frame structure device 430, for example. The third frame structure device 430 can thus, comprise one or more interfaces 432 which can co-act with corresponding interfaces provided with the functional device 800. Respective corresponding interfaces can comprise one or more form-fit elements, such as e.g. plug- and/or corresponding socket-elements, which enable moveably supporting or moving, e.g. via sliding, pivoting, etc., the functional device 800 at the third frame structure device 430 in the at least one degree of freedom of motion.

Particularly, the functional device 800 can be attached to the third frame structure device 430 via detachable or non-detachable attachment means. As such, it is conceivable that the functional device 430 can be transferred into respective configurations by de-attachment from defined first attachment portions provided with the third frame structure device 430 and re-attachment to defined other attachment portions provided with the third frame structure device 430; each attachment portion can thus, be correlated with a specific orientation and/or position of the functional device 800 relative to the third frame structure device 430. As an example, respective attachment portions can be provided along the longitudinal axis LA of the passenger seat 100.

In the exemplary embodiment shown in the Fig., the functional device 800 is transferrable in the at least two different configurations by moving same in at least one degree of freedom of motion which comprises a translational degree of freedom of motion via which the functional device 800 can be moved in a first position (see e.g. Fig. 1) in which it can be used in the first configuration of the passenger seat 100, particularly by a passenger using the passenger seat 100 in the first configuration, and in a second position (see Fig. 4) in which the functional device 800 is at least partially received in a, particularly slot-like shaped, receiving portion of the or an adjacent passenger seat 100.

Fig. 10 further shows that the third frame structure device 430 can comprise one or more, particularly web-like, frame structure device elements 432 which can be interconnected at defined connection points. The third frame structure device 430 can thus, generally comprise an open frame design which enables that the third frame structure device 430 can also define a stowage area.

The third frame structure device 430 can be connected to the first and/or second frame structure device 410, 420 which can provide the overall frame structure 400 with enhanced stability. Yet, it is also conceivable that the third frame structure device 430 can be independent from the first and/or second frame structure device 410, 420, i.e. not connected with the first and/or second frame structure device 410, 420. In either case, the third frame structure device 430 can comprise at least one connection interface 433 which can comprise one or more connection elements, such as e.g. anchoring elements, which can enable a stable mechanical connection with a structural element of a vehicle on which the passenger seat 100 is installed. A respective structural element of a vehicle can be or comprise connection interfaces, such as e.g. rails provided with a floor of the vehicle. For aircraft applications, respective connection interfaces can particularly, be or comprise connection rails provided for connecting a passenger seat 100 to the floor of a passenger cabin of the aircraft.

As is further apparent from the Fig., the passenger seat 100 can comprise at least one first stowage volume SV1 which is arranged below the functional device 800, particularly below a motion axis, particularly the translation axis (indicated by arrow P2), in which the functional device 800 is moveable between a respective first and second orientation and/or position as indicated above. The first stowage volume SV1 can thus, generally be provided with the third frame structure device 430. The first stowage volume SV1 can comprise an upright cuboid stowage volume, for example. The first stowage volume SV1 can be closeable with a lid element which can be arranged in a vertical plane. The first stowing volume SV1 can comprise one or more mechanical and/or electrical and/or electronic interfaces IF (see e.g. Fig. 1) for an item stowed therein. It is also conceivable that the passenger seat comprises 100 multiple respective first stowage volumes SV1 in a side-by-side arrangement, e.g. substantially arranged along the longitudinal axis LA of the passenger seat 100.

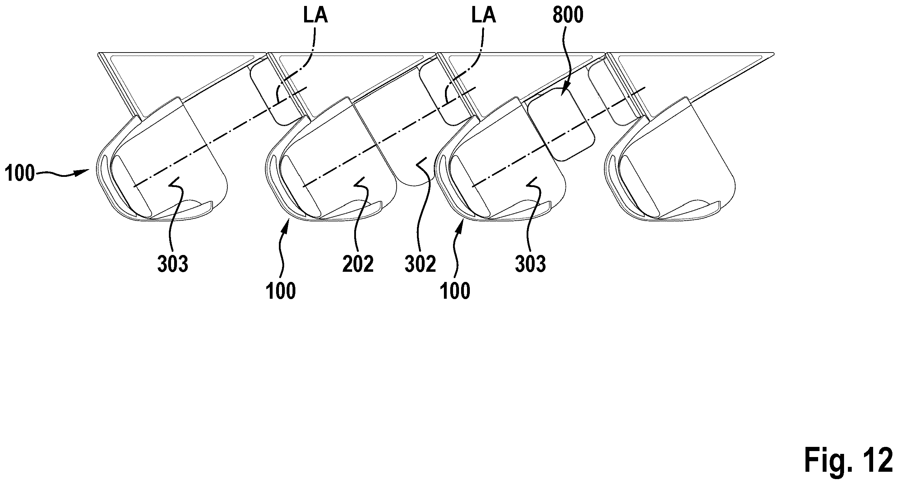

Further, the passenger seat 100 can comprise at least one second stowing area SA2 which can comprise a freely exposed substantially horizontally extending stowing surface. Particularly, the stowing surface can be arranged in a (common) plane with a table device or the functional device 800, respectively. The second stowage area SA2 can thus, generally be provided with the third frame structure device 430. The stowing surface can particularly, be arranged on a side of a portion of the third frame structure device 430 which is opposite to a side of the third frame structure device 430 which comprises a support of the functional device 800. The stowing surface can comprise a triangular base shape, for example. Notably, the hypotenuse of the triangle forming the triangular base shape can extend at an acute angle β relative to the longitudinal axis LA of the passenger seat 100. A respective triangular base shape can contribute to a small "geometric footprint" of the passenger seat 100 which particularly, enables compact arrangements of multiple passenger seats 100 as is shown in the exemplary embodiment of Fig. 12. A substantially extending vertically extending privacy element PE, such as. e.g. a vertically extending wall element, can be provided with a rear free end of the stowing surface to avoid that a rear passenger has access to the stowing surface.

Further, the passenger seat 100 can comprise a third stowage volume SV3 which can be arranged adjacent the first or second module 200, 300 (see e.g. the top-view of Fig. 2). Notably, the third stowage volume SV3 can be closeable with at least one lid element LE which can be arranged in a plane coinciding with the freely exposed surface of the first module 200 in the second configuration of the passenger seat 100 or with the freely exposed surface of the second module 300 in the first configuration of the passenger seat 100. Particularly, the third stowage volume SV3 can be provided in the region of a headrest in the second configuration of the passenger seat 100 such that the passenger can lie close to his personal belongings stowed in the third stowage volume SV3, for example. The third stowage volume SV3 can thus, generally be provided with the first or second frame structure device 410, 420.

As indicated above, at least one additional stowage area or stowage volume can be provided beneath the first module 200. As indicated above, such a stowage area or stowage volume, respective can be defined by the second surface 203 of the first module 200 which can be arranged to delimit, particularly together with a respective underground, a stowage volume beneath at least the first module 200 in the first configuration of the passenger seat 100.

Fig. 12 shows a principle drawing of a passenger seat arrangement 900 for a vehicle, particularly an aircraft, which comprises multiple passenger seats 100. The arrangement of the passenger seats 100 of the passenger seat arrangement 900 can be generally freely chosen (and will typically, be chosen under consideration of the available space in a respective vehicle. In the exemplary embodiment of Fig. 12, multiple passenger seats 100 are arranged in a longitudinal arrangement (one after the other). Fig. 12 shows in a top-view that respective longitudinal axes LA of the passenger seats 100 can be substantially parallel. Due to the geometric footprint of the passenger seats 100, the arrangement of the passenger seats 100 can be very compact.

## Claims

1. A passenger seat for a vehicle, particularly for an aircraft, the passenger seat being transferrable in a first configuration in which it provides a sitting surface on which a passenger can sit and in a second configuration in which it provides a lying surface on which a passenger can lie;
wherein the passenger seat comprises at least a first module and a second module, wherein, in the first configuration of the passenger seat, the first module provides a support surface for supporting the second module and the second module provides the sitting surface for a passenger, and
wherein in the second configuration of the passenger seat, the first module provides a first part of the lying surface for a passenger and the second module provides a second part of the lying surface for a passenger.

2. The passenger seat of claim 1, wherein each of the first module and the second module comprises a first surface and, particularly opposite to the first surface, a second surface, wherein
in the first configuration of the passenger seat, the first surface of the first module provides the support surface for the second such that the first surface of the first module supports the second surface of the second module and the first surface of the second module provides the sitting surface for a passenger, and
in the second configuration of the passenger seat, the first surface of the first module provides the first part of the lying surface for a passenger and the first surface or the second surface of the second module provides the second part of the lying surface for a passenger.

3. The passenger seat of claim 2, wherein the second surface of the second module provides, in the second configuration of the passenger seat, the second part of the lying surface for a passenger,
wherein particularly at least the second module is transferrable, by moving same in at least one degree of freedom of motion, in a first state in which the first surface of the second module is exposed such that it provides the sitting surface for a passenger such, and in a second state in which the second surface of the second module is exposed such that it provides the second part of the lying surface for a passenger,
wherein the at least one degree of freedom of motion is or comprises a rotational motion, particularly a pivot motion, about a rotation axis, particularly a pivot axis, wherein the rotation axis, particularly the pivot axis, is particularly a horizontal axis.

4. The passenger seat of any one of the preceding claims, wherein the second module comprises at least one gripping portion which can be gripped by a passenger for transferring the second module from the first state in the second state, or vice versa.

5. The passenger seat of any one of the preceding claims, wherein the second module is moveably connected to the first module, particularly wherein the moveable connection comprises the at least one degree of freedom of motion in which the at least one second module can be transferred in its respective first and second state.

6. The passenger seat of any one of the preceding claims, further comprising at least one of:
a third module which provides a backrest for a passenger, particularly a backrest with lumbar support, in the first configuration of the passenger seat, and/or which provides a pillow for a passenger in the second configuration of the passenger seat, and
a fourth module which provides a footrest for a passenger at least in the second configuration of the passenger seat.

7. The passenger seat of any one of the preceding claims, further comprising a third module which provides a backrest for a passenger, particularly a backrest with lumbar support, in the first configuration of the passenger seat, and/or which provides a pillow for a passenger in the second configuration of the passenger seat, and a fourth module which provides a footrest for a passenger at least in the second configuration of the passenger seat, wherein at least the first module, the second module, and the fourth module provide a substantially plane lying surface for a passenger in the second configuration of the passenger seat.

8. The passenger seat of any one of the preceding claims, wherein, in the first configuration of the passenger seat, the passenger seat provides a sitting surface for a passenger, wherein the sitting surface comprises a sitting level plane, and in the second configuration of the passenger seat, the passenger seat provides a lying surface for a passenger, wherein the lying surface comprises a lying level plane, wherein the lying level plane is different from the sitting level plane, particularly lower than the sitting level plane.

9. The passenger seat of any one of the preceding claims, further comprising a housing structure which at least partially houses at least the first module and the second module in the first configuration of the passenger seat, wherein the housing structure comprises one or more walls extending in a substantially vertical direction, particularly to create a privacy space for a passenger of the passenger seat,
wherein the housing structure particularly comprises a shell element and a backrest element at least partially surrounded by the shell element, wherein the backrest element comprises at least one of: one or more backrest surfaces for a passenger of the passenger seat and/or one or more armrest surfaces, particularly provided by projections and/or recesses, for a passenger of the passenger seat;
wherein the shell element particularly comprises one or more first support portions, particularly provided as projections or recesses, for supporting the backrest element, and/or
wherein the shell element particularly comprises one or more second support portions, particularly provided as projections or recesses, for supporting the shell element on a frame structure of the passenger seat.

10. The passenger seat of claim 9, wherein the shell element is at least partially, particularly completely, made of or comprises a flexible plastic element, particularly made from a thermoformed plastic sheet material, and/or wherein the backrest element is made of or comprises a flexible cushion element, particularly with a removable dress cover.

11. The passenger seat of any one of the preceding claims, further comprising a frame structure for supporting at least the second module, wherein the frame structure particularly comprises at least one of:
at least one first frame structure device which comprises at least one first connection interface for connecting the first frame structure device to a vehicle, particularly an aircraft, and/or at least one second connection interface for connecting the first frame structure device to the at least module or a supporting element supporting the second module, and
at least one second frame structure device which comprises at least one first connection interface for connecting the second frame structure device to the first frame device, and/or at least one second connection interface for connecting the second frame structure device to the or at least one housing structure.

12. The passenger seat of claim 11, wherein the at least one second frame structure device comprises one or more first supporting elements providing one or more first support sites or interfaces for supporting the housing structure in a first spatial direction, particularly comprising a horizontal spatial direction, and one or more second supporting elements providing one or more second support sites or interfaces for supporting the housing structure in a second spatial direction, particularly comprising a vertical spatial direction; and/or
wherein the at least one second support structure device comprises a design of a chair frame which comprises one or more segments extending in different spatial directions and being connected at one or more connection nodes..

13. The passenger seat of any one of claims 20 - 23, further comprising a third support structure device which comprises one or more supporting elements providing one or more support sites or interfaces for supporting at least one functional device, particularly a table device, wherein the at least one functional device can be transferred, e.g. by moving same in at least one degree of freedom of motion, into at least two different configurations.

14. The passenger seat of claim 14, wherein the at least one functional device is transferrable in the at least one two different configuration by moving same in at least one degree of freedom of motion which comprises a translational degree of freedom of motion in which the at least one functional device can be moved in a first position in which it can be used in the first configuration of the passenger seat, particularly by a passenger using the passenger seat in the first configuration, and in a second position in which the at least one functional device is at least partially received in a, particularly slot-like shaped, receiving portion of the or an adjacent passenger seat.

15. The passenger seat of claim 14, comprising at least one first stowing area or stowage volume which is arranged below the at least one functional device, particularly below a motion axis in which the at least one functional device is moveable between the respective first and second position.
